# EUROPÄISCHE PATENTSCHRIFT

(11) **EP 4 515 120 B1**
(45) Veröffentlichungstag und Bekanntmachung des Hinweises auf die Patenterteilung: **17.12.2025**
(21) Anmeldenummer: 23721714.6
(22) Anmeldetag: 24.04.2023
(51) Int. Cl.: F16G 13/16, H02G 11/00

(54) **VERFAHREN UND SYSTEM ZUR INDIREKTEN ERKENNUNG VON VERSCHLEISS EINER GLEITENDEN ENERGIEFÜHRUNGSKETTE**
METHOD AND SYSTEM FOR INDIRECTLY DETECTING WEAR OF A SLIDING ENERGY CHAIN
PROCÉDÉ ET SYSTÈME DE DÉTECTION INDIRECTE DE L'USURE D'UNE CHAÎNE D'ÉNERGIE COULISSANTE

(30) Priorität: 25.04.2022 DE 102022109964; 28.10.2022 DE 102022128793
(43) Veröffentlichungstag der Anmeldung: 05.03.2025
(73) Patentinhaber: Igus GmbH, 51147 Köln (DE)
(72) Erfinder: HABERING, Richard, 51143 Köln (DE); SCHMER, Konstantin, 51143 Köln (DE)
(74) Vertreter: Lippert Stachow Patentanwälte Rechtsanwälte
(86) Internationale Anmeldenummer: PCT/EP2023/060673
(87) Internationale Veröffentlichungsnummer: WO 2023/208852

(56) Entgegenhaltungen:
- EP-B1- 2 935 941

## Beschreibung

Die Erfindung betrifft allgemein ein System und ein Verfahren zur Überwachung bzw. Zustandsüberwachung (engl. condition monitoring) einer verfahrbaren bzw. dynamischen Leitungsführung, insbesondere einer Energieführungskette, zum Führen mindestens einer Leitung, wie z.B. eines Kabels, Schlauchs oder dgl., zwischen einem stationären Festpunkt und einem dazu relativbeweglichen Mitnehmer, typisch an einem beweglichen Anlagen- oder Maschinenteil.

Die Erfindung betrifft insbesondere ein System und ein Verfahren zur indirekten Erkennung von Verschleiß im Betrieb der Energieführungskette, sodass vorausschauende Wartung ermöglicht wird.

Die Energieführungskette bildet beim Verfahren typisch ein stationäres Untertrum, ein verfahrbares Obertrum und dazwischen einen mitfahrenden Umlenkbogen. Die Erfindung betrifft insbesondere Energieführungsketten mit gleitendem Obertrum für lange Verfahrwege.

Zur Verschleißerkennung sind Lösungen bekannt, bei welchen besondere Sensormodule in der Leitungsführungseinrichtung bzw. Energieführungskette eingebaut werden, wie etwa in WO 2017/129805 A1 oder WO 2019/201482 A1 vorgeschlagen. Diese Lösungen erfordern jedoch bauliche Veränderungen an der Energieführungskette und verfügbaren Bauraum im inneren Aufnahmeraum für die Leitungen. Ein weiterer Ansatz zur Verschleißüberwachung wurde in WO 2021/043668 A1 vorgeschlagen, auch hier sind jedoch konstruktive Maßnahmen an der Energieführungskette erforderlich, bzw. dieser Ansatz ist nur für gleitende Energieführungsketten mit Gleitschuhen geeignet. Darüber hinaus wurde in der EP 1 521 015 A2 ein Ansatz zur Verschleißüberwachung vorgestellt, bei welcher anhand eines Verschleißelements mit einer Sollbruchstellefestgestellt wird, ob ein kritischer verschleiß der Kette vorliegt. Die Sollbruchstelle dabei der Indikator, der für einen kritischen Verschleißzustand der Kette eingesetzt wird.

In der DE 20 2016 000 501 U1 wurde ein Ansatz wie in WO 2017/129805 A1 vorgestellt, bei welchem ein Verschleißelement als Transponder ausgebildet ist. In der DE 20 2016 107 317 U1 bzw. WO 2018/115528 A1 wurde ein Ansatz vorgestellt, bei welchem ein Verlauf der Kette überwacht wird, was jedoch nicht ohne Weiteres zur Verschleißerkennung geeignet ist.

In der EP 2 935 941 B1 wurde eine Energieführungsvorrichtung mit wenigstens einer Antriebseinrichtung für lange Verfahrwege vorgestellt, bei welcher der Verschleiß der Energieführungsvorrichtung über Sensorik überwacht wird.

Wünschenswert ist eine konstruktiv einfache Lösung zur Erkennung von Verschleiß im Betrieb unterschiedlicher Energieführungsketten, die möglichst vielseitig einsetzbar und möglichst ohne bauliche Maßnahmen, oder Modifikation bzw. Veränderung mit einer bestehenden Energieführungskette realisierbar ist. Es soll insbesondere eine Verschleiß-Überwachung (engl. wear monitoring) betreffend die typischen Gelenkverbindungen zwischen Kettengliedern ermöglicht werden, ohne dass die Energieführungskette hierfür modifiziert werden muss.

Dies Aufgabe wird gelöst durch ein System nach Anspruch 1 bzw. ein Verfahren nach Anspruch 9. Bevorzugte Ausführungsformen bzw. weiterbildende Merkmale sind in den Unteransprüchen 2 bis 8 bzw. 10 bis 15 angegeben. Weitere Merkmale ergeben sich insbesondere aus diesen abhängigen Patentansprüchen.

Die Erfindung geht aus von einem System zur indirekten Verschleißerkennung an einer Energieführungskette. Die Energieführungskette dient typisch zum Führen mindestens einer Leitung, wie z.B. eines Kabels, Schlauchs oder dgl., zwischen einem stationären Festpunkt und einem dazu relativbeweglichen Mitnehmer, wobei die Energieführungskette verfahrbar ist unter Bildung eines stationären Untertrums, eines verfahrbaren Obertrums und dazwischen eines Umlenkbogens. Dabei ist die Energieführungskette insbesondere, bei langen Verfahrwegen typisch, mit gleitendem Obertrum ausgeführt und angeordnet. Unter einem gleitenden Obertrum wird vorliegend auch ein auf dem Untertrum abrollendes Obertrum verstanden.

Es wird vorgeschlagen, dass die Sensoranordnung mindestens zwei Sensoren umfasst, die jeweils so angeordnet und eingerichtet sind, dass die Sensoren abhängig von mindestens einem Merkmal, das beim Verfahren der Energieführungskette relativ zur Sensoranordnung periodisch, insbesondere entsprechend der Kettenteilung der Energieführungskette, wiederholend auftritt bzw. erfassbar ist, entsprechende Ausgabesignale zu erzeugen, welche die Auswerteeinrichtung auswertet und dass die Auswerteeinrichtung eingerichtet ist, um das zeitliche Verhalten der Ausgabesignale der einzelnen Sensoren zu erfassen und auszuwerten. Vorzugsweise weist das System eine vorzugsweise stationär angeordnete Sensoranordnung und eine Auswerteeinrichtung auf, welche signaltechnisch mit der Sensoranordnung verbunden ist.

Erfindungsgemäß ist die Sensoranordnung angeordnet und eingerichtet, abhängig von mindestens einem Merkmal, das beim Verfahren, insbesondere Bewegen, der Energieführungskette relativ zur Sensoranordnung periodisch, insbesondere entsprechend der Kettenteilung der Energieführungskette, wiederholend auftritt, insbesondere erfassbar ist, entsprechende Ausgabesignale zu erzeugen, welche die Auswerteeinrichtung auswertet. Insbesondere erlaubt es die Erfindung, mittels zumindest zweier Sensoren eine Erfassung eines Zeitverhaltens der Energieführungskette vorzunehmen und vorteilhaft auszuwerten, z.B. zur Bestimmung von zunehmendem Verschleiß welcher indirekt durch Änderung im Zeitverhalten erkennbar sein kann.

Das Merkmal kann dabei insbesondere ein Konstruktionsmerkmal der Energieführungskette, insbesondere des einzelnen Kettenglieds, sein. Es handelt sich vorzugsweise um ein inhärent vorhandenes Konstruktionsmerkmal der Energiekette, welches in Kettenlängsrichtung wiederholend auftritt. Das Konstruktionsmerkmal kann dabei über die Gesamtlänge der Kette vielfacht wiederholt vorkommen, z.B. an jedem Kettenglied oder jedem zweiten Kettenglied und z.B. über nahezu die gesamte Länge zwischen den Endbefestigungen vorgesehen sein.

Bevorzugt ist das System angeordnet und eingerichtet zur indirekten Verschleißerkennung an zumindest einem Kettenglied der Energieführungskette, bevorzugt zur Erkennung von Verschleiß an einer Verbindung von zumindest zwei Kettengliedern der Energieführungskette. Bevorzugt weist die Energieführungskette eine Vielzahl wie beispielsweise einige zehn, oder deutlich über hundert Kettenglieder auf, welche bevorzugt alle baugleich (mit sog. gekröpften Laschen oder Gabellaschen) oder alternierend baugleich (z.B. mit alternierenden Innen- u. Außenlaschen) ausgebildet sind, ggf. von endseitigen Endanschlussgliedern abgesehen.

Die Erfindung bietet viele Vorteile. Insbesondere kann vorteilhaft ein Verschleißzustand einzelner Kettenglieder erkannt werden. Dies erlaubt es gezielt bei einer Wartung nur Teile der Energieführungskette zu ersetzen oder z.B. höher beanspruchte Kettenglieder bei einer Wartung mit weniger beanspruchten Kettengliedern austauschen zu einem. So kann z.B. die Gesamtlebensdauer bzw. Nachhaltigkeit der Energieführungskette erhöht werden.

Bevorzugt ist das System zur indirekten Verschleißerkennung an der Energieführungskette, zwischen einem stationären Festpunkt der Energieführungskette und einem dazu relativbeweglichen Mitnehmer der Energieführungskette angeordnet.

Typisch ist zumindest ein Ende der Energieführungskette entlang einer Längsachse der Energieführungskette beweglich, insbesondere verfahrbar, insbesondere gegenüber zumindest einem weiteren Ende der Energieführungskette. Vorzugsweise ist der stationäre Festpunkt der Energieführungskette an einem Ende der Energieführungskette angeordnet. Vorzugsweise ist der Mitnehmer der Energieführungskette an einem anderen Ende der Energieführungskette, angeordnet. Typisch bildet der Mitnehmer ein Ende der Energieführungskette. Gedanklich ist die Energieführungskette beim Verfahren in zumindest drei verschiedene Bereiche einteilbar. Vorzugsweise ist einer der zumindest drei Bereiche ein stationärer Untertrum, welcher sich von einem Ende, insbesondere dem Ende, an welchem der stationäre Festpunkt angeordnet ist, der Energieführungskette bis zum Umlenkbogen erstreckt und welcher insbesondere von einem sich parallel zur Längsachse der Energieführungskette erstreckenden Teil der Energieführungskette gebildet ist. Vorzugsweise ist der Bereich der Energieführungskette, welcher das stationäre Untertrum bildet, nur in Bezug auf das Ende, an welchem der stationäre Festpunkt angeordnet ist, stationär ausgebildet.

Das System zur indirekten Verschleißerkennung ist vorzugsweise am Festpunkt in gedachter Verlängerung des stationären Untertrum angeordnet, derart dass das bewegliche Obertrum an, insbesondere über der Sensoranordnung des Systems vorbeifährt und/oder durch den Erfassungsbereich der Sensoranordnung verfährt.

Vorzugsweise ist somit einer der zumindest drei Bereiche ein verfahrbarer Obertrum, welcher sich von einem Ende, insbesondere dem Ende, an welchem der Mitnehmer angeordnet ist, der Energieführungskette bis zum Umlenkbogen erstreckt und welcher insbesondere von einem sich parallel zur Längsachse der Energieführungskette erstreckenden Teil der Energieführungskette gebildet ist. Vorzugsweise ist einer der zumindest drei Bereiche ein zwischen den anderen Bereichen der Energieführungskette, bevorzugt dem stationären Untertrum und dem verfahrbaren Obertrum, angeordneter Umlenkbogen, welcher insbesondere einen über in etwa 180°-Winkelmass verlaufenden Bogen (sog. Umlenkbogen) der Energieführungskette ausbildet. Vorzugsweise ist das Obertrum gleitend auf dem Untertrum gelagert. Das Obertrum kann alternativ oder zusätzlich rollend, insbesondere mittels zumindest einem Rollenelement, auf dem Untertrum gelagert sein - wobei ein abrollendes Obertrum vorliegend unter dem Sammelbegriff gleitendes Obertrum verstanden wird.

Das System weist vorzugsweise eine, insbesondere gegenüber der Energieführungskette, stationär angeordnete Sensoranordnung auf. Vorzugsweise weist das System eine davon getrennt ausgeführte und angeordnete Auswerteeinrichtung auf. Vorzugsweise ist die Auswerteeinrichtung signaltechnisch, insbesondere zu einem Datenübertrag, bevorzugt zumindest von der Sensoranordnung zu der Auswerteeinrichtung, mit der Sensoranordnung verbunden. Vorzugsweise überträgt die Sensoranordnung im Betrieb ein kontinuierliches Signal an die Auswerteeinrichtung, beispielsweise in Echtzeit oder als periodisches Signal mit einer geeigneten Sendefrequenz von mindestens 20Hz, bevorzugt mindestens 50Hz.

Vorzugsweise ist die Sensoranordnung angeordnet und eingerichtet, abhängig von mindestens einem Merkmal der Energieführungskette, entsprechende Ausgabesignale zu erzeugen, welche die Auswerteeinrichtung auswertet. Vorzugsweise ist die Sensoranordnung eingerichtet abhängig von mindestens einem Merkmal der Energieführungskette, entsprechende Ausgabesignale zu erzeugen und an die Auswerteeinrichtung zu senden. Vorzugsweise tritt das Merkmal der Energieführungskette beim Verfahren, insbesondere Bewegen, der Energieführungskette relativ zu der Sensoranordnung periodisch, insbesondere entsprechend der Kettenteilung der Energieführungskette, wiederholend auf. Vorzugsweise ist das zumindest eine Merkmal der Energieführungskette ein Merkmal, welches so ausgewählt ist, dass es an jedem Kettenglied der Energieführungskette, insbesondere jeweils an der gleichen Stelle des Kettenglieds, auftritt.

Vorzugsweise ist das Merkmal der Energieführungskette beim Verfahren, insbesondere Bewegen, der Energieführungskette relativ zu der Sensoranordnung periodisch, insbesondere entsprechend der Kettenteilung der Energieführungskette, wiederholend erfassbar. Beispielsweise kann das zumindest eine Merkmal der Energieführungskette als ein jeweiliges in Bezug auf den Umlenkbogen innenliegendes Element der Kettenglieder gewählt sein. Beispielsweise kann das zumindest eine Merkmal der Energieführungskette als eine Beschriftung an den Kettengliedern ausgebildet sein.

Besonders bevorzugt wird als das zumindest eine Merkmal der Energieführungskette ein Quersteg bzw. ein Bestandteil des Querstegs genutzt, der inhärent an jedem oder jedem n-ten Kettenglied vorgesehen ist. Der Quersteg ist dabei inhärent bzw. an sich optisch und/oder elektromagnetisch detektierbar, ohne dass eine Veränderung nötig wäre.

Ergänzend oder alternativ kann das zumindest eine Merkmal der Energieführungskette als ein mit geringem Aufwand hinzufügbares Merkmal vorgesehen sein. So kann z.B. ein Code, wie insbesondere Barcode und/oder QR-Code, an den Kettengliedern ausgebildet sein. Beispielsweise kann das zumindest eine Merkmal der Energieführungskette als ein Optikelement an den Kettengliedern ausgebildet sein, insbesondere zu einem Erzeugen eines optischen Signals, bevorzugt eines elektromagnetischen Signals, beispielsweise im sichtbaren optischen Spektrum, bevorzugt im Infrarot Spektrum, besonders bevorzugt außerhalb des im nicht sichtbaren Spektrum.

Auch andere Gestaltungen kommen in Betracht. So kann die Sensoranordnung dazu eingerichtet sein, zumindest optische, bevorzugt elektromagnetische, Signale zu erfassen. Beispielsweise kann das zumindest eine Merkmal der Energieführungskette als ein Akustikelement eines Kettenglieds ausgebildet sein, insbesondere zu einem Erzeugen eines akustischen Signals, beispielsweise im hörbaren Signalfrequenzspektrum, bevorzugt im nichthörbaren Signalfrequenzspektrum, z.B. im Ultraschallbereich, alternativ im Infraschallbereich. Insbesondere kann die Sensoranordnung dazu eingerichtet sein, zumindest akustische Signale, insbesondere Schallwellen bzw. Körperschall, zu erfassen. Hierbei kann auch ein inhärent bei Verfahren erzeugtes Fahrgeräusch überwacht werden, ohne dass besondere bzw. zusätzliche Akustikelemente vorgesehen werden.

Vorzugsweise ist die Sensoranordnung dazu ausgebildet, die Energieführungskette, insbesondere das zumindest eine Merkmal der Energieführungskette, bevorzugt jedes Kettenglieds der Energieführungskette, beim Verfahren der Energieführungskette zu überwachen. Vorzugsweise weist die Sensoranordnung mindestens einen, bevorzugt zumindest zwei, Sensor/en auf, die dazu ausgebildet, zumindest ein Merkmal der Energieführungskette beim Verfahren der Energieführungskette zu erfassen.

Besonders bevorzugt ist die Auswerteeinrichtung dazu ausgebildet, aus den Ausgabesignalen, welche die Auswerteeinrichtung von der Sensoranordnung empfängt, einen Abstand zwischen zwei Kettengliedern der Energieführungskette zu ermitteln.

Vorzugsweise ist die Auswerteeinrichtung dazu ausgebildet, aus den Ausgabesignalen, welche die Auswerteeinrichtung von der Sensoranordnung empfängt, eine Momentangeschwindigkeit der Kettenglieder, beispielsweise einzelner Kettenglieder oder jeweils zweier Kettenglieder, der Energieführungskette zu ermitteln.

Vorzugsweise ist die Auswerteeinrichtung dazu ausgebildet, die ermittelten Abstände zwischen jeweils zwei Kettengliedern mittels ermittelter Momentangeschwindigkeiten, insbesondere der betrachteten Kettenglieder zu normieren.

Besonders bevorzugt ist die Auswerteeinrichtung dazu ausgebildet, aus ermittelten, insbesondere normierten, Abständen der Kettenglieder der Energieführungskette einen Verschleißzustand der Energieführungskette, insbesondere der Kettenglieder der Energieführungskette, zu ermitteln.

In einer Weiterbildung ist die Auswerteeinrichtung dazu ausgebildet, aus den Ausgabesignalen, welche die Auswerteeinrichtung von der Sensoranordnung empfängt, eine Änderung der Momentangeschwindigkeit der Kettenglieder der Energieführungskette zu ermitteln. Hierbei kann die Auswerteeinrichtung dazu ausgebildet sein, aus ermittelten Änderungen der Momentangeschwindigkeit der Kettenglieder der Energieführungskette einen Verschleißzustand der Energieführungskette, insbesondere der Kettenglieder der Energieführungskette, zu ermitteln. Beispielsweise ist eine Geschwindigkeitsaufnahme bei einem Richtungswechsel der Energieführungskette zwischen verschleißbedingt mit Spiel verbundenen Kettengliedern langsamer als zwischen den im Neuzustand mit nur durch Herstellungstoleranz bedingtem Spiel verbundenen Kettengliedern.

Es kann z.B. aus einer Beschleunigung von einzelnen Kettengliedern auf den Verschleißzustand der Verbindung zweier Kettenglieder geschlossen werden.

Insbesondere kann aus einer Frequenz, bevorzugt Frequenzänderung, der Signale von der Sensoranordnung eine, insbesondere vorteilhaft relativ genaue, Bestimmung der Geschwindigkeiten und Beschleunigungen der Kettenglieder erreicht werden. Insbesondere können Frequenzeffekte, wie beispielsweise ein Dopplereffekt, verwendet werden, um eine, insbesondere vorteilhaft besonders genaue, Bestimmung der Geschwindigkeiten und Beschleunigungen der Kettenglieder zu erreichen. Insbesondere kann die Auswerteeinrichtung dazu ausgebildet sein, aus den, insbesondere normierten, Abständen der Kettenglieder der Energieführungskette und aus ermittelten Änderungen der Momentangeschwindigkeit der Kettenglieder der Energieführungskette den Verschleißzustand der Energieführungskette, insbesondere der Kettenglieder der Energieführungskette, zu ermitteln und bevorzugt zu mitteln. Unter einer "Längsachse" eines Objekts soll hierbei insbesondere eine Achse verstanden werden, welche parallel zu einer längsten Kante eines kleinsten, gedachten, geometrischen Quaders verläuft, welcher das Objekt gerade noch vollständig umschließt, und bevorzugt durch einen geometrischen Mittelpunkt des Objekts, insbesondere des Quaders, verläuft.

Die Auswerteeinrichtung umfasst insbesondere zumindest einen Prozessor und/oder zumindest eine Prozessoreinheit, zumindest eine Speichereinheit, und ein in der Speichereinheit gespeichertes Betriebs-, Steuer- und/oder Berechnungsprogramm.

Erfindungsgemäß sind die zumindest zwei Sensoren, insbesondere der Sensoranordnung, jeweils derart angeordnet, dass die Sensoren mindestens ein Merkmal, das beim Verfahren der Energieführungskette relativ zur Sensoranordnung periodisch, insbesondere entsprechend der Kettenteilung der Energieführungskette, wiederholend auftritt, erfassen. Die zumindest zwei Sensoren, insbesondere der Sensoranordnung, sind jeweils dazu eingerichtet, abhängig von dem mindestens einen Merkmal entsprechende Ausgabesignale zu erzeugen. Bevorzugt ist die Auswerteeinrichtung dazu ausgebildet, die Ausgabesignale auszuwerten. Erfindungsgemäß ist die Auswerteeinrichtung dazu eingerichtet, das zeitliche Verhalten der Ausgabesignale der einzelnen Sensoren zu erfassen und auszuwerten. Durch die erfindungsgemäße Ausgestaltung des Systems zur Erfassung zur indirekten Verschleißerkennung an einer Energieführungskette kann eine vorteilhafte präzise Überwachung des Verschleißzustands der Energieführungskette erreicht werden. Insbesondere kann ein vorteilhaft kostengünstiges frühzeitiges Erkennen eines drohenden Reißens der Energieführungskette erreicht werden.

Des Weiteren wird vorgeschlagen, dass die zumindest zwei Sensoren in Verfahrrichtung zueinander beabstandet und derart angeordnet und eingerichtet, dass jeder der Sensoren die Anwesenheit vorbeifahrender Querstege der Energieführungskette erfasst und ein entsprechendes Ausgabesignal ausgibt. Vorzugsweise umfasst die Sensoranordnung mehrere in Verfahrrichtung zueinander beabstandete Sensoren, und ist derart angeordnet, dass jeder der Sensoren die Anwesenheit vorbeifahrender Merkmale, insbesondere Querstege als das zumindest eine Merkmal der Energieführungskette, der Energieführungskette erfasst und ein entsprechendes Ausgabesignal ausgibt. Bevorzugt umfasst die Sensoranordnung mehrere, bevorzugt zumindest zwei, insbesondere zumindest drei, Sensoren, welche bevorzugt in Verfahrrichtung der Energieführungskette zueinander beabstandet angeordnet sind, bevorzugt welche in Verfahrrichtung der Energieführungskette zueinander zumindest teilweise und/oder zumindest vollständig versetzt angeordnet sind. Bevorzugt erfasst jeder der Sensoren jeweils die Anwesenheit des betrachteten zumindest einen Merkmals, beispielsweise vorbeifahrender Querstege, der Energieführungskette. Bevorzugt gibt jeder der Sensoren ein zu der erfassten Anwesenheit oder Abwesenheit desselben zumindest einen Merkmals, beispielsweise des vorbeifahrenden Querstegs, der Energieführungskette entsprechendes Ausgabesignal aus. Es kann eine vorteilhaft langzeitig ununterbrochene Erfassung des zumindest einen Merkmals der Energieführungskette erreicht werden.

Ferner wird vorgeschlagen, dass die Sensoren als elektromagnetische, insbesondere als kapazitive Näherungssensoren ausgeführt sind. Vorzugsweise sind die Sensoren der Sensoranordnung funktional gleich und/oder baugleich ausgebildet.

Die Sensoren der Sensoranordnung können alternativ und/oder ergänzend auch als induktive Näherungssensoren, als Akustische Sensoren, als Lichtschranken, insbesondere als Infrarot-Lichtschranken oder dgl., ausgebildet sein. Es kann eine vorteilhaft schnelle, insbesondere hochaufgelöste, Überwachung der Energieführungskette erreicht werden.

Des Weiteren wird vorgeschlagen, dass mindestens zwei Sensoren der Sensoranordnung in einem Abstand entsprechend der nominalen (neuwertigen) Kettenteilung angeordnet sind und/oder angeordnet und eingerichtet sind ein Merkmal zu erfassen, das von der Kettenteilung abhängig ist. Vorzugsweise sind mindestens zwei Sensoren vorgesehen und/oder zwei Sensoren in einem Abstand entsprechend der nominalen, insbesondere in Bezug auf eine neuwertige, Kettenteilung angeordnet. Bevorzugt weist die Sensoranordnung zumindest zwei Sensoren auf, welche zueinander entlang der Verfahrrichtung, insbesondere entlang der Längsachse der Energieführungskette, in einem Abstand entsprechend der nominalen, insbesondere in Bezug auf eine neuwertige, Kettenteilung versetzt angeordnet sind. Vorzugsweise weist das System zur indirekten Verschleißerkennung an der Energieführungskette die Energieführungskette auf. Bevorzugt sind geometrische Mittelpunkte zumindest zweier Sensoren zueinander entlang der Verfahrrichtung, insbesondere entlang der Längsachse der Energieführungskette, in einem Abstand entsprechend der nominalen, insbesondere in Bezug auf eine neuwertige, Kettenteilung versetzt angeordnet. Es können zwei Kettenglieder gleichzeitig erfasst werden, um einen Abstand zwischen den zwei Kettengliedern vorteilhaft überwachen zu können.

Ferner wird in bevorzugter Weiterbildung vorgeschlagen, dass die Sensoranordnung in Verfahrrichtung der Energieführungskette stationär neben dem Festpunkt angeordnet ist. Vorzugsweise ist die Sensoranordnung stationär mit einer Trägereinheit, insbesondere einer Schieneneinheit, für die Energieführungskette verbunden. Vorzugsweise ist die Sensoranordnung zu einem Überwachen des Obertrums der Energieführungskette in Verfahrrichtung der Energieführungskette stationär neben dem Festpunkt angeordnet. Typisch ist der stationäre Festpunkt der Energieführungskette an dem Untertrum der Energieführungskette angeordnet. Vorzugsweise ist die Sensoranordnung in Verfahrrichtung der Energieführungskette, insbesondere entlang der Längsachse der Energieführungskette, versetzt zu dem stationären Festpunkt angeordnet. Vorzugsweise weist die Schieneneinheit zumindest zwei zu der Längsachse der Energieführungskette parallel ausgerichtete Schienen auf, an welchen die Energieführungskette gelagert ist und mit welchen die Sensoranordnung mechanisch verbunden bzw. bzgl. welchen die Sensoranordnung ortsfest ist. Vorzugsweise ist der stationäre Festpunkt der Energieführungskette entlang der Längsachse der Schieneneinheit versetzt zu der Sensoranordnung mit der Schieneneinheit verbunden. Es kann eine vorteilhafte Überwachung des Obertrums beim Verfahren der Energieführungskette erreicht werden.

Des Weiteren wird vorgeschlagen, dass die Auswerteeinrichtung aus dem zeitlichen Verhalten der Ausgabesignale die Momentangeschwindigkeit einzelner Kettenglieder erfasst und/oder wobei die Auswerteeinrichtung drei Sensoren umfasst, wobei zwei Sensoren der Sensoranordnung in einem Abstand entsprechend der nominalen Kettenteilung angeordnet sind und ein dritter Sensor zur Fahrrichtungserkennung vorgesehen ist. Vorzugsweise erfasst und/oder ermittelt die Auswerteeinrichtung das zeitliche Verhalten der Ausgabesignale der Sensoranordnung, insbesondere einzelner Sensoren und/oder erfasst, bevorzugt ermittelt, aus den Ausgabesignalen die Momentangeschwindigkeit einzelner Kettenglieder. Vorzugsweise ermittelt die Auswerteeinrichtung aus den Abständen, insbesondere in Kombination mit den Momentangeschwindigkeiten, zweier benachbarter Kettenglieder einen Verschleißzustand einer Verbindung der zwei Kettenglieder. Vorzugsweise ist ein dritter Sensor, insbesondere der Sensoranordnung, dazu ausgebildet, eine Fahrrichtung, die insbesondere der momentanen Verfahrrichtung entspricht, der Energieführungskette zu erfassen. Vorzugsweise ist ein dritter Sensor, insbesondere der Sensoranordnung, dazu ausgebildet, eine Fahrrichtung, insbesondere die momentane Verfahrrichtung der Energieführungskette, ggf. direkt zu erkennen und an die Auswerteeinrichtung zu übermitteln. Alternativ oder zusätzlich kann die Auswerteeinrichtung dazu ausgebildet sein, die Fahrrichtung, die insbesondere der momentanen Verfahrrichtung entspricht, der Energieführungskette aus den Ausgabesignalen des dritten Sensors, ggf. in Zusammenwirkung mit den zu den Ausgabesignalen eines er anderen beiden Sensoren zu ermitteln. Alternativ oder zusätzlich kann die momentane Verfahrrichtung bzw. Bewegungsrichtung, z.B. vorwärts in die ausgezogene Stellung oder zurück in die eingezogene Stellung, des bewegten Trums der Energieführungskette auch durch oder anhand einer oder beiden erstgenannten Sensoren ermittelt werden.

Es kann vorteilhaft geschwindigkeitsunabhängig eine Überwachung des Verschleißes einer Energieführungskette erreicht werden, insbesondere an den erfahrungsgemäß gefährdetsten Kettengliedern, z.B. am mitnehmerseitigen ersten Drittel der Kettenlänge. Als Konstruktionsmerkmal kommt insoweit bevorzugt ein inhärentes Merkmal der Kette in Betracht, das zumindest auch in diesem ersten Drittel mehrfach vorkommt.

Ferner wird vorgeschlagen, dass die Auswerteeinrichtung die Ausgabesignale der Sensoranordnung auf Abweichungen zu einem vorgespeicherten Verhalten bzw. Referenzwerten einer neuwertigen Energieführungskette hin auswertet. Vorzugsweise umfasst die Auswerteeinrichtung zumindest ein Speichermodul, auf welchem Daten mit Referenzwerten bzw. Richtwerten, die zu einer neuwertigen Energieführungskette korrespondieren, gespeichert, bevorzugt vorgespeichert, sind. Es kann hiermit eine vorteilhaft schnelle Ermittlung von Fehlverhalten der Energieführungskette erreicht werden.

Des Weiteren wird vorgeschlagen, dass die Auswerteeinrichtung durch Messung von Zeitintervallen zwischen Erfassung des periodischen Merkmals und anhand einer jeweils erfassten Momentangeschwindigkeit den Abstand zwischen aufeinanderfolgenden Kettengliedern ermittelt und vorzugweise mit einer vorbestimmten, nominalen Kettenteilung vergleicht zwecks Verschleiß-Erkennung. Vorzugsweise ermittelt die Auswerteeinrichtung durch Messung von Zeitintervallen zwischen Erfassung des periodischen Merkmals und anhand einer jeweils erfassten Momentangeschwindigkeit den normierten Abstand zwischen aufeinanderfolgenden Kettengliedern. Vorzugsweise vergleicht die Auswerteeinrichtung jeden ermittelten, und insbesondere normierten, Abstand mit einer vorbestimmten, nominalen Kettenteilung zu einer Verschleiß-Erkennung an den entsprechenden Kettengliedern. Es kann eine vorteilhaft präzise Erkennung Verschleißes einer Energieführungskette erreicht werden.

Ferner wird vorgeschlagen, dass die Auswerteeinrichtung abhängig von der Auswertung, insbesondere in Funktion eines aktuell erfassten Abstands zwischen periodischen Merkmalen, eine Wartungsempfehlung ausgibt. Die Wartungsempfehlung kann dabei, z.B. an einen übergeordneten Rechner ausgegeben werden. Vorzugsweise weist die Auswerteeinrichtung ein Ausgabemodul auf, welches z.B. Datentechnisch mit einem übergeordneten System verbunden ist und/oder als optisches, akustisches und/oder haptisches Ausgabemodul ausgebildet sein kann. Das Ausgabemodul kann ergänzend z.B. zur akustischen Ausgabe ausgebildet sein. Bevorzugt ist das Ausgabemodul zumindest teilweise als Display und/oder teilweise als Lautsprecher ausgebildet. Die Wartungsempfehlung kann z.B. als akustischer Alarmton ausgegeben werden. Ergänzend oder alternativ kann die Wartungsempfehlung als optisches Alarmsignal ausgebildet sein. Es kann somit, insbesondere ergänzend zu einer datentechnischen Meldung bzw. Nachricht an ein übergeordnetes System auch eine vorteilhaft optische und/oder akustische Wartungsempfehlung ausgegeben werden.

Des Weiteren wird vorgeschlagen, dass die Sensoranordnung und die Auswerteeinrichtung eine Vielzahl aufeinanderfolgender Kettenglieder erfassen zur abschnittsweisen Verschleiß-Erkennung. Vorzugsweise ist die Sensoranordnung dazu ausgebildet, die Energieführungskette bei einem Verfahren bzw. im Betrieb der Energieführungskette laufend bzw. permanent zu überwachen, insbesondere das zumindest eine Merkmal der Kettenglieder laufend an den Kettengliedern zu erfassen. Es kann eine vorteilhaft dauerhafte Überwachung der Kettenglieder erreicht werden.

Darüber hinaus wird eine Methode (Engl. method) bzw. ein Verfahren (engl. process) vorgeschlagen zur indirekten Verschleißerkennung an der Energieführungskette.

Das Verfahren geht aus von einem Verfahren zur indirekten Verschleißerkennung an einer Energieführungskette, zum Führen mindestens einer Leitung, wie z.B. eines Kabels, Schlauchs oder dgl., zwischen einem stationären Festpunkt und einem dazu relativbeweglichen Mitnehmer, wobei die Energieführungskette verfahrbar ist unter Bildung eines stationären Untertrums, eines verfahrbaren Obertrums und dazwischen eines Umlenkbogens, und die Energieführungskette insbesondere mit gleitendem Obertrum ausgeführt und angeordnet ist, wobei eine vorzugsweise stationär angeordnete Sensoranordnung vorgesehen ist und eine Auswerteeinrichtung vorgesehen ist, welche signaltechnisch mit der Sensoranordnung verbunden ist.

Es wird vorgeschlagen, dass die Sensoranordnung mindestens zwei Sensoren umfasst, die jeweils so angeordnet und eingerichtet sind, dass die Sensoren abhängig von mindestens einem Merkmal, das beim Verfahren der Energieführungskette relativ zur Sensoranordnung periodisch, insbesondere entsprechend der Kettenteilung der Energieführungskette, wiederholend auftritt, entsprechende Ausgabesignale erzeugen,
- dass in zumindest einem Verfahrensschritt durch die Sensoranordnung, abhängig von mindestens einem solchen Merkmal, das beim Verfahren der Energieführungskette relativ zur Sensoranordnung periodisch, insbesondere entsprechend der Kettenteilung der Energieführungskette, wiederholend auftritt bzw. erfassbar ist entsprechende Ausgabesignale erzeugt werden, welche durch die Auswerteeinrichtung auswertet werden und
- dass die Auswerteeinrichtung das zeitliche Verhalten der Ausgabesignale der einzelnen Sensoren erfasst und auswertet.

Vorzugsweise werden in zumindest einem Verfahrensschritt durch die Sensoranordnung abhängig von dem mindestens einen Merkmal, das beim Verfahren (engl. movement), insbesondere planmäßigen Bewegen, der Energieführungskette relativ zur Sensoranordnung periodisch, insbesondere entsprechend der Kettenteilung der Energieführungskette, wiederholend auftritt und insbesondere erfassbar ist, entsprechende Ausgabesignale erzeugt, welche durch die Auswerteeinrichtung auswertet werden. Vorzugsweise wird in zumindest einem Verfahrensschritt durch die Sensoranordnung die an der Sensoranordnung vorbeibewegte Energieführungskette überwacht. Vorzugsweise wird in zumindest einem Verfahrensschritt durch die Sensoranordnung bei jedem Erfassen des zumindest einen Merkmals an einem Kettenglied ein Ausgabesignal erzeugt. Vorzugsweise wird in zumindest einem Verfahrensschritt zumindest jedes Ausgabesignal an die Auswerteeinrichtung gesendet. Vorzugsweise wird in zumindest einem Verfahrensschritt ein kontinuierliches Ausgabesignal an die Auswerteeinrichtung gesendet, welches in Abhängigkeit einer Anwesenheit des zumindest einen Merkmals einen definierten Wert annimmt und ansonsten einen Basiswert annimmt.

Des Weiteren wird vorgeschlagen, dass die Sensoren in Verfahrrichtung zueinander beabstandet angeordnet sind und in zumindest einem Verfahrensschritt durch jeden Sensor der Sensoranordnung die Anwesenheit vorbeifahrender Querstege, insbesondere als das zumindest eine Merkmal, der Energieführungskette erfasst wird und ein entsprechendes Ausgabesignal ausgegeben wird. Es kann eine vorteilhaft langzeitig ununterbrochene Erfassung des zumindest einen Merkmals der Energieführungskette erreicht werden.

Des Weiteren wird vorgeschlagen, dass in zumindest einem Verfahrensschritt kapazitive Näherungssensoren als die Sensoren der Sensoranordnung verwendet werden. Es kann eine vorteilhaft schnelle, insbesondere hochaufgelöste, Überwachung der Energieführungskette erreicht werden.

Ferner wird vorgeschlagen, dass die zumindest zwei Sensoren der Sensoranordnung ein Merkmal erfassen, das von der Kettenteilung abhängig ist. Es kann vorzugsweise ein dritter Sensor vorgesehen ist, dessen Ausgabesignal, z.B. direkt oder indirekt, zur Fahrrichtungserkennung genutzt wird.

Vorzugsweise werden in zumindest einem Verfahrensschritt mindestens zwei Sensoren der Sensoranordnung verwendet und/oder zwei Sensoren der Sensoranordnung verwendet, welche in einem Abstand entsprechend der nominalen (neuwertigen) Kettenteilung angeordnet sind. Es können zwei Kettenglieder gleichzeitig erfasst werden, um einen Abstand zwischen den zwei Kettengliedern vorteilhaft überwachen zu können.

Des Weiteren wird vorgeschlagen, dass in zumindest einem Verfahrensschritt die Sensoranordnung verwendet wird, welche in Verfahrrichtung der Energieführungskette stationär neben dem Festpunkt angeordnet ist. Es kann eine vorteilhafte Überwachung des Obertrums beim Verfahren der Energieführungskette erreicht werden.

Des Weiteren wird vorgeschlagen, dass in zumindest einem Verfahrensschritt die Auswerteeinrichtung aus dem zeitlichen Verhalten der Ausgabesignale einzelner Sensoren die Momentangeschwindigkeit einzelner Kettenglieder erfasst. Vorzugsweise wird in zumindest einem Verfahrensschritt durch die Auswerteeinrichtung das zeitliche Verhalten der Ausgabesignale der Sensoranordnung, insbesondere einzelner Sensoren, erfasst und/oder durch die Auswerteeinrichtung aus den Ausgabesignalen die Momentangeschwindigkeit einzelner Kettenglieder erfasst. Vorzugsweise wird in zumindest einem Verfahrensschritt durch die Auswerteeinrichtung aus dem zeitlichen Verhalten der Ausgabesignale, insbesondere einzelner Sensoren, der Sensoranordnung die Momentangeschwindigkeit einzelner Kettenglieder ermittelt. Vorzugsweise wird in zumindest einem Verfahrensschritt durch die Auswerteeinrichtung aus den Ausgabesignalen, und insbesondere aus dem zeitlichen Verhalten der Ausgabesignale, insbesondere einzelner Sensoren, der Sensoranordnung die, insbesondere geschwindigkeitsnormierten, Abstände einzelner Kettenglieder zueinander ermittelt. Es kann eine vorteilhaft schnelle, insbesondere hochaufgelöste, Überwachung der Energieführungskette erreicht werden.

Ferner wird vorgeschlagen, dass in zumindest einem Verfahrensschritt durch die Auswerteeinrichtung die Ausgabesignale der Sensoranordnung, insbesondere einzelner Sensoren, auf Abweichungen zu einem vorgespeicherten Verhalten einer neuwertigen Energieführungskette hin ausgewertet werden. Vorzugsweise wird in zumindest einem Verfahrensschritt durch die Auswerteeinrichtung zumindest ein, bevorzugt geschwindigkeitsnormierter, Abstand einzelner Kettenglieder zueinander mit vorgespeicherten Abständen einer neuwertigen Energieführungskette verglichen. Es kann eine vorteilhaft geschwindigkeitsunabhängige Überwachung des Verschleißes einer Energieführungskette erreicht werden, insbesondere an den erfahrungsgemäß gefährdetsten Kettengliedern.

Des Weiteren wird vorgeschlagen, dass in zumindest einem Verfahrensschritt durch die Auswerteeinrichtung durch Messung von Zeitintervallen zwischen Erfassung des periodischen Merkmals und anhand einer jeweils erfassten Momentangeschwindigkeit der Abstand zwischen aufeinanderfolgenden Kettengliedern ermittelt wird und vorzugweise mit einer vorbestimmten, nominalen Kettenteilung verglichen wird zwecks Verschleiß-Erkennung. Es kann eine vorteilhaft schnelle Ermittlung von Fehlverhalten der Energieführungskette erreicht werden.

Ferner wird vorgeschlagen, dass in zumindest einem Verfahrensschritt durch die Auswerteeinrichtung abhängig von der Auswertung, insbesondere in Funktion eines aktuell erfassten Abstands zwischen periodischen Merkmalen, eine Wartungsempfehlung ausgegeben wird. Es kann eine vorteilhaft optische und/oder akustische Wartungsempfehlung ausgegeben werden.

Des Weiteren wird vorgeschlagen, dass in zumindest einem Verfahrensschritt durch Sensoranordnung und Auswerteeinrichtung eine Vielzahl aufeinanderfolgender Kettenglieder, erfasst werden zur abschnittsweisen Verschleiß-Erkennung. Es kann eine vorteilhaft dauerhafte Überwachung der Kettenglieder erreicht werden.Weitere Einzelheiten und Vorteile der einzelnen Erfindungsaspekte lassen sich, ohne Beschränkung der Allgemeinheit des Vorstehenden, der nachfolgenden Erläuterung bevorzugter Ausführungsbeispiele anhand der beigefügten Zeichnungen entnehmen. Merkmale mit entsprechender bzw. identischer Struktur oder Funktion haben entsprechende Bezugszeichen und werden ggf. nicht wiederholt beschrieben. Hierbei zeigen:
**FIG.1****:** eine Seitenansicht einer Energieführungskette mit abgleitendem Obertrum;
**FIG.2****:** eine perspektivische Ansicht eines bevorzugten Ausführungsbeispiels eines Systems mit einer Sensoranordnung mit mehreren Sensoren, welche die Anwesenheit vorbeifahrender Querstege der Energieführungskette erfassen.
**FIG.3****:** schematisch eine Sensoranordnung für mehrere Sensoren mit Lochraster für verschiedene Kettentypen;
**FIG.4A-4D****:** zeigen das zeitliche Verhalten der einzelnen Sensoren bei vorbeifahrender Energieführungskette; und
**FIG.5****:** zeigt schematisiert ein erfindungsgemäßes Verfahren.

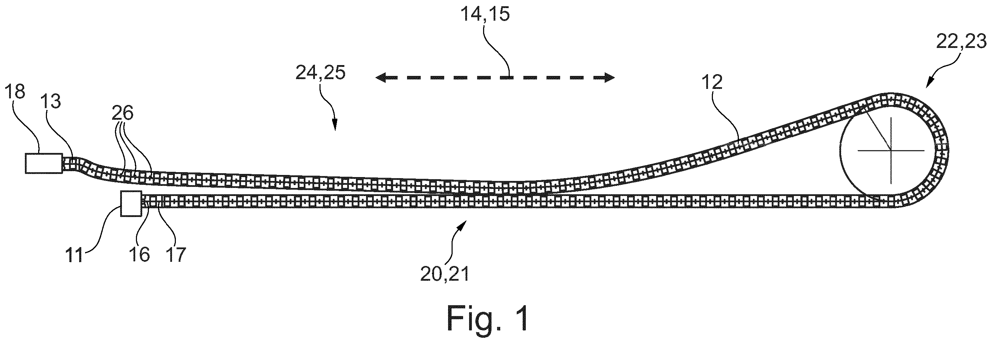

Die FIG. 1-4 zeigen eine Realisierung zur Umsetzung des Grundprinzips zur Ermittlung des Verschleißes, z.B. durch zunehmendes Bolzen-Bohrungsspiel in der Gelenkverbindung der Kettenglieder durch Berechnung des Abstandunterschiedes der Öffnungsstege bzw. Querstege zwischen Zug- und Schubbewegung der Energieführungskette. Der Öffnungssteg-Abstand entspricht der Zeit zwischen Erkennung zweier Öffnungsstege bei gemessener MomentanGeschwindigkeit.

FIG.1 zeigt eine Energieführungskette 12 (nachfolgend kurz EFK). Ein Ende 13 der EFK 12 ist entlang einer Längsachse 14 der EFK 12 beweglich, insbesondere hin- und her verfahrbar, insbesondere gegenüber zumindest einem weiteren Ende 17 der EFK 12. Ein stationärer Festpunkt 16 der EFK 12 ist an einem Ende 17 der EFK 12 angeordnet. Ein Mitnehmer 18 der EFK 12 ist am anderen Ende 13 der EFK 12 angeordnet. Der Mitnehmer 18 bildet ein Ende 13 der EFK 12. Die EFK 12 ist derart angeordnet, dass die EFK 12 beim Verfahren des Mitnehmers 18 der EFK 12 zumindest drei verschiedene Bereiche 20, 22, 24 bildet, die im gezeigten Beispiel dem Untertrum, dem Umlenkbogen und Obertrum entsprechen.

Einer der drei Bereiche 20, 22, 24 ist ein stationärer Untertrum 21, welcher sich von dem Ende 17, an welchem der stationäre Festpunkt 16 angeordnet ist, der EFK 12 bis zu einem Umlenkbogen 23 erstreckt und welcher von einem sich parallel zur Längsachse 14 der EFK 12 erstreckenden Teil der EFK 12 gebildet ist. Der Bereich 20 der EFK 12, welcher das stationäre Untertrum 21 bildet, ist nur in Bezug auf das Ende 17, an welchem der stationäre Festpunkt 16 angeordnet ist, stationär ausgebildet. Einer der drei Bereiche 20, 22, 24 ist ein verfahrbarer Obertrum 25, welcher sich von dem Ende 13, an welchem der Mitnehmer 18 angeordnet ist, der EFK 12 bis zum Umlenkbogen 23 erstreckt und welcher von einem sich parallel zur Längsachse 14 der EFK 12 erstreckenden Teil der 12 gebildet ist. Das Obertrum 25 ist gleitend auf dem Untertrum 21 gelagert. Einer der drei Bereiche 20, 22, 24 ist ein zwischen dem stationären Untertrum 21 und dem verfahrbaren Obertrum 25, angeordneter Umlenkbogen 23, welcher einen 180°-Bogen der EFK 12 ausbildet.

Die Erfindung ist jedoch ohne Weiteres auch auf eine EFK 12 mit verfahrbarem Untertum 21 und stationären Obertrum 25 anwendbar.

Zur Führung von einer oder mehreren Leitung(en), wie Kabeln, Schläuchen oder dgl., hat die EFK 12 einen weitestgehend bekannten Aufbau. Die EFK 12 umfasst eine Vielzahl von Kettengliedern 26, welche quer zur Längsachse 14 gelenkig miteinander verbunden sind. Beispielhaft sind lediglich drei Kettenglieder 26 mit einem Bezugszeichen versehen. Die EFK 12 weist ein bewegliches Ende 13 auf, an dem der Mitnehmer 18 angeordnet ist. Die EFK 12 hat ein feststehendes Kettenende 25, das an einer meist raumfesten Basis 11 einer äußeren Trägerstruktur fest angeflanscht ist. Der Mitnehmer 18 fährt in einem Aktivzustand bspw. entlang der Längsachse 14 hin- und her, insbesondere nach links und rechts in FIG.1, relativ zum stationären Festpunkt 16. Der Mitnehmer 18 ist z.B. eine bewegliche Anschlussstelle in einer Maschine, welche mit Energie, Daten und/oder Medien zu versorgen ist. Die Basis 11 bildet meist die feststehende Anschlussstelle. Der Mitnehmer 18 könnte alternativ auch vertikalbeweglich oder entlang zwei Achsen fahrbar sein. Die EFK 12 bildet einen Umlenkbogen 23, welcher entsprechend der Mitnehmerbewegung mitfährt. Der Umlenkbogen 23 ist z.B. über eine Umlenkrolle, oder meistens durch winkelbegrenzende Anschläge der Kettenglieder 26 definiert.

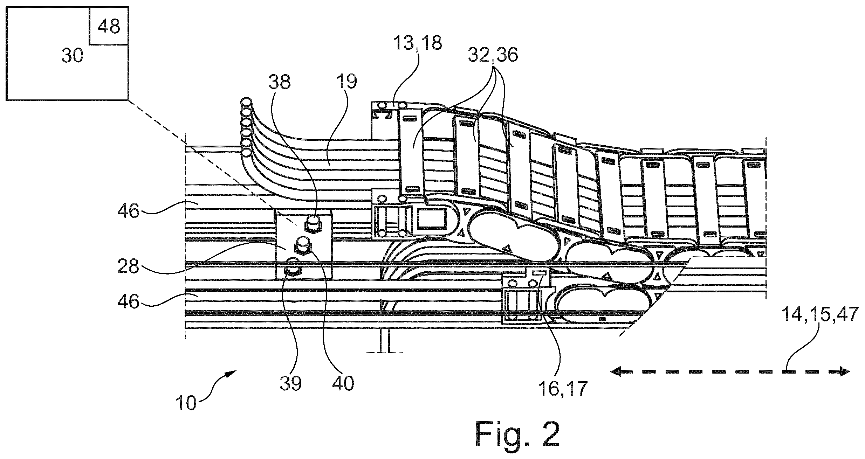

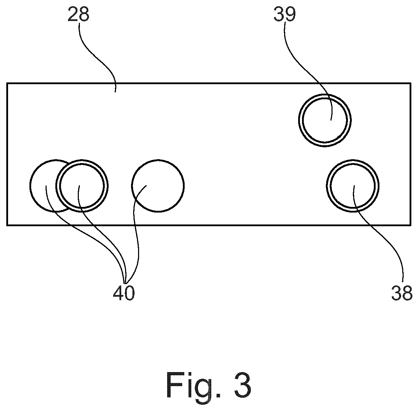

FIG.2 zeigt als Prinzipschema ein System, allgemein mit 10 bezeichnet, zur indirekten Verschleißerkennung an der EFK 12. Das System 10 umfasst als Hauptbestandteile: eine EFK 12, eine Auswerteeinrichtung 30 und eine an der EFK 12 angeordnete Sensoranordnung 28. Die Anordnung der drei Sensoren 18, 18', 18" der Sensoranordnung 28 ist in FIG.2 rein exemplarisch. Die Anordnung der drei Sensoren 18, 18', 18" der Sensoranordnung 28 ist genauer in FIG.3 beschrieben. Die Sensoranordnung 28 ist signaltechnisch mit der Auswerteeinrichtung 30 verbunden.

FIG.2 zeigt insbesondere das System zur indirekten Verschleißerkennung an der EFK 12. Die EFK 12 ist zum Führen mindestens einer Leitung 19, wie z.B. eines Kabels, Schlauchs oder dgl. ausgebildet. Die EFK 12 ist zum Führen mindestens einer Leitung 19 zwischen dem stationären Festpunkt 16 und einem dazu relativbeweglichen Mitnehmer 18 ausgebildet. Die EFK 12 ist unter Bildung eines stationären Untertrums 21, eines verfahrbaren Obertrums 25 und dazwischen eines Umlenkbogens 23 verfahrbar. Die EFK 12 ist auf dem Untertrum gleitendem Obertrum 25 ausgeführt und angeordnet.

Das System 10 weist eine stationär angeordnete Sensoranordnung 28 und eine Auswerteeinrichtung 30 aufweist, welche signaltechnisch mit der Sensoranordnung verbunden ist, wobei die Sensoranordnung angeordnet und eingerichtet ist, abhängig von mindestens einem Merkmal, das beim Verfahren, insbesondere Bewegen, der EFK 12 relativ zur Sensoranordnung periodisch, insbesondere entsprechend der Kettenteilung der EFK 12, wiederholend auftritt, insbesondere erfassbar ist, entsprechende Ausgabesignale zu erzeugen, welche die Auswerteeinrichtung auswertet. Das System 10 ist zur indirekten Verschleißerkennung an den Kettengliedern 26 der EFK 12 ausgebildet. Die EFK 12 weist beispielhaft über zwanzig Kettenglieder 26 auf, welche alle baugleich ausgebildet sind. Das System 10 ist zur indirekten Verschleißerkennung eines Verschleißes der EFK 12, zwischen dem stationären Festpunkt 16 der EFK 12 und einem dazu relativbeweglichen Mitnehmer 18 der EFK 12 ausgebildet.

Das System 10 weist die gegenüber der EFK 12 stationär angeordnete Sensoranordnung 28 auf. Das System 10 weist die Auswerteeinrichtung 30 auf. Die Auswerteeinrichtung 30 ist signaltechnisch zu einem Datenübertrag von der Sensoranordnung 28 zu der Auswerteeinrichtung 30 mit der Sensoranordnung 28 verbunden.

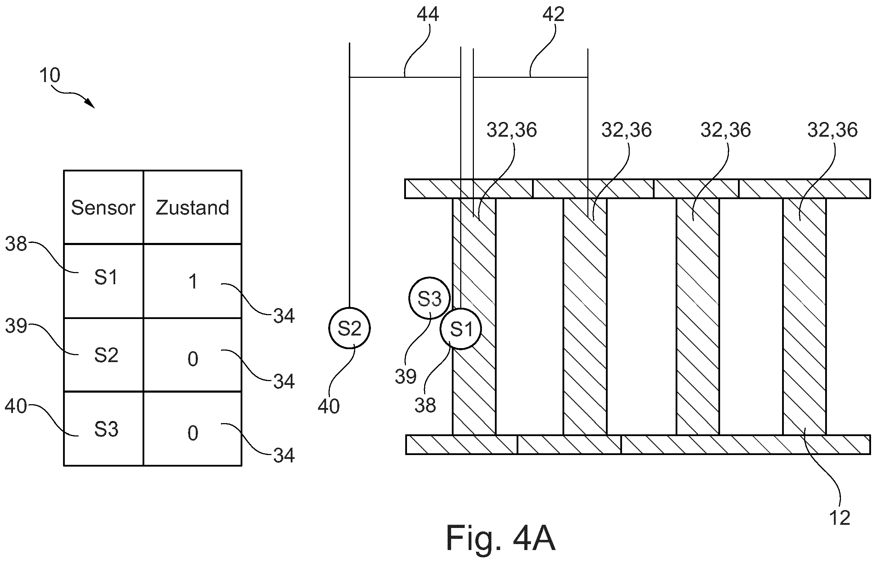

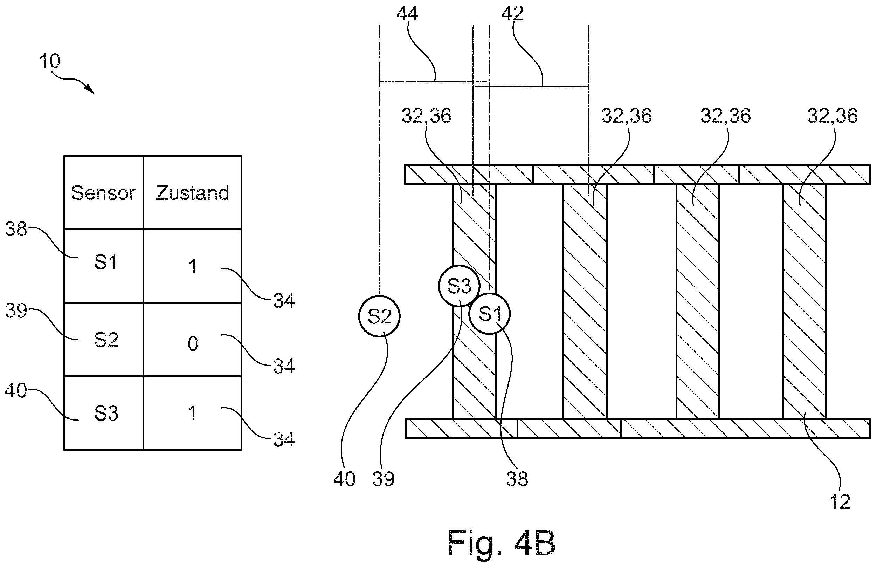

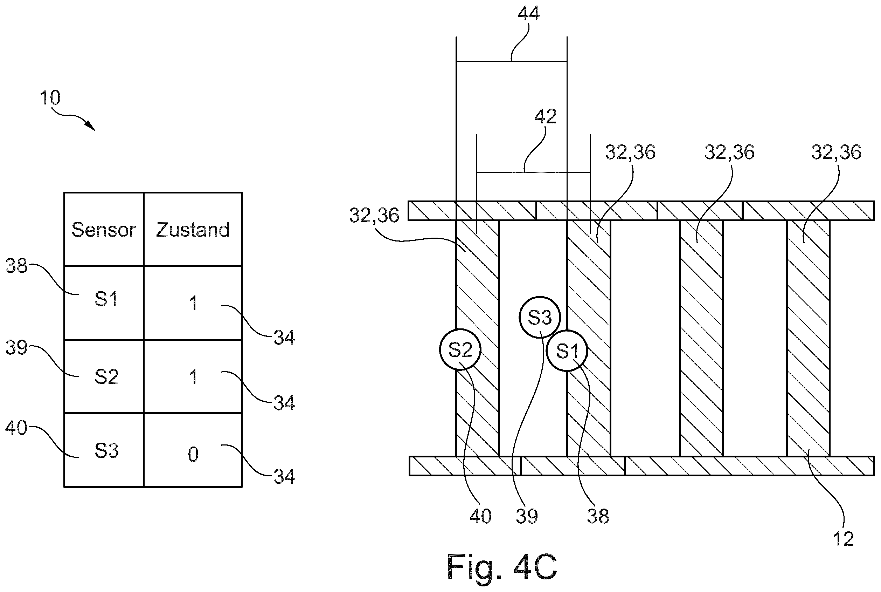

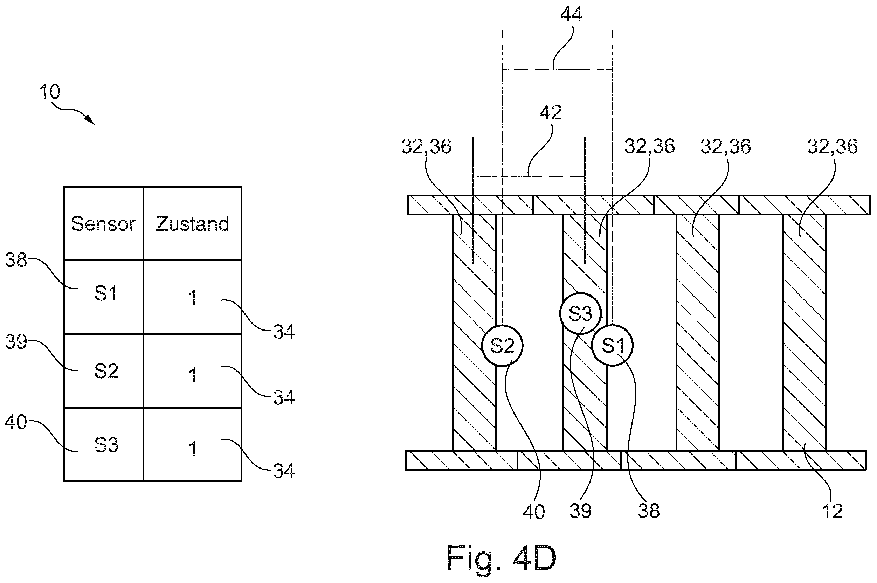

Die Sensoranordnung 28 überträgt beispielsweise ein kontinuierliches Signal an die Auswerteeinrichtung 30, beispielsweise in Echtzeit oder als periodisches Signal mit einer Sendefrequenz von mindestens 20Hz. Die Sensoranordnung 28 ist angeordnet und eingerichtet, abhängig von mindestens einem Merkmal 32 der EFK 12, entsprechende Ausgabesignale 34 zu erzeugen, welche die Auswerteeinrichtung 30 auswertet (vgl. Fig. 4A bis 4D).

Die Sensoranordnung 28 ist dazu eingerichtet, abhängig von mindestens einem Merkmal der EFK 12, entsprechende Ausgabesignale 34 zu erzeugen und an die Auswerteeinrichtung 30 zu senden. Das Merkmal 32 der EFK 12 tritt beim Verfahren, insbesondere Bewegen, der EFK 12 relativ zu der Sensoranordnung 28 periodisch, insbesondere entsprechend der Kettenteilung der EFK 12, wiederholend auf. Das Merkmal 32 der EFK 12 ist ein Merkmal 32, welches an jedem Kettenglied 26 der EFK 12, insbesondere jeweils an der gleichen Stelle der Kettenglieder 26, auftritt. Das Merkmal 32 der EFK 12 ist beim Verfahren, insbesondere Bewegen, der EFK 12 relativ zu der Sensoranordnung 28 periodisch, insbesondere entsprechend der Kettenteilung der EFK 12, wiederholend erfassbar. Beispielsweise ist das Merkmal 32 der EFK 12 als ein jeweiliges Unterelement der Kettenglieder 26 ausgebildet. Das Merkmal 32 der EFK 12 ist hier beispielhaft als ein Quersteg 36 an den Kettengliedern 26 ausgebildet. Die Sensoranordnung 28 ist dazu ausgebildet, die EFK 12, insbesondere das Merkmal 32 der EFK 12, bevorzugt jedes Kettenglieds 26 der EFK 12, beim Verfahren der EFK 12 zu überwachen. Die Sensoranordnung 28 weist drei Sensoren 38, 39, 40 auf, die dazu ausgebildet sind, das Merkmal 32 der EFK 12 beim Verfahren der EFK 12 zu erfassen. Die Sensoren 38, 39, 40 sind als kapazitive Näherungssensoren ausgeführt. Die Sensoren 38, 39, 40 der Sensoranordnung 28 sind alle funktional gleich und baugleich ausgebildet.

Die Auswerteeinrichtung 30 ist dazu ausgebildet, aus den Ausgabesignalen 34, welche die Auswerteeinrichtung 30 von der Sensoranordnung 28 empfängt, einen Abstand 42 zwischen zwei Kettengliedern 26 der EFK 12 zu ermitteln (vgl. Fig. 4A-4D). Die Auswerteeinrichtung 30 ist dazu ausgebildet, aus den Ausgabesignalen 34, welche die Auswerteeinrichtung 30 von der Sensoranordnung 28 empfängt, eine Momentangeschwindigkeit beispielsweise einzelner Kettenglieder 26 der EFK 12 zu ermitteln. Die Auswerteeinrichtung 30 ist dazu ausgebildet, die ermittelten Abstände 42 zwischen jeweils zwei Kettengliedern 26 mittels ermittelter Momentangeschwindigkeiten der Kettenglieder 26 zu normieren. Die Auswerteeinrichtung 30 ist dazu ausgebildet, aus ermittelten, insbesondere normierten, Abständen 42 der Kettenglieder 26 der EFK 12 einen Verschleißzustand der EFK 12, insbesondere der Kettenglieder der EFK 12, zu ermitteln. Die Auswerteeinrichtung 30 kann zusätzlich dazu ausgebildet sein, aus den Ausgabesignalen 34, welche die Auswerteeinrichtung 30 von der Sensoranordnung 28 empfängt, eine Änderung der Momentangeschwindigkeit der Kettenglieder 26 der EFK 12 zu ermitteln. D Die Auswerteeinrichtung 30 kann zusätzlich dazu ausgebildet sein, aus ermittelten Änderungen der Momentangeschwindigkeit der Kettenglieder 26 der EFK 12 einen Verschleißzustand der EFK 12, insbesondere der Kettenglieder der EFK 12, zu ermitteln.

Die Sensoranordnung 28 umfasst mehrere in Verfahrrichtung 15 der EFK 12, insbesondere entlang der Längsachse 14 der EFK 12, zueinander beabstandete Sensoren 38, 39, 40 und ist so angeordnet, dass jeder der Sensoren 38, 39, 40 die Anwesenheit vorbeifahrender Querstege 36, insbesondere als das zumindest eine Merkmal 32 der EFK 12, der EFK 12 erfasst und ein entsprechendes Ausgabesignal 34 ausgibt.

Die Sensoranordnung 28 umfasst drei Sensoren 38, 39, 40, welche in Verfahrrichtung 15 der EFK 12, insbesondere entlang der Längsachse 14 der EFK 12, zueinander beabstandet angeordnet sind, insbesondere von welchen zwei in Verfahrrichtung 15 der EFK 12 zueinander teilweise versetzt angeordnet sind und von welchen einer gegenüber den anderen vollständig in Verfahrrichtung 15 der EFK 12 versetzt angeordnet ist. Die Verfahrrichtung 15 der EFK 12 ist parallel zur Längsachse 14 der EFK 12 ausgerichtet.

Jeder der Sensoren 38, 38, 40 erfasst die Anwesenheit des Merkmals 32, beispielsweise vorbeifahrender Querstege 36, der EFK 12. Jeder der Sensoren 38, 38, 40 gibt ein zu der erfassten Anwesenheit oder Abwesenheit des Merkmals 32, beispielsweise des vorbeifahrenden Querstegs 36, der EFK 12 entsprechendes Ausgabesignal 34 aus (vgl. Fig. 4A-4D).

Mindestens zwei Sensoren 38, 39, 40 sind vorgesehen und/oder zwei Sensoren 38, 39, 40 sind in einem Abstand entsprechend der nominalen, insbesondere in Bezug auf eine neuwertige, Kettenteilung angeordnet (vgl. Fig. 3, 4A-4D). Die Sensoranordnung 28 weist zumindest zwei Sensoren 38, 40 auf, welche zueinander entlang der Verfahrrichtung 15, insbesondere entlang der Längsachse 14 der EFK 12, in einem Abstand 44 entsprechend der nominalen, insbesondere in Bezug auf eine neuwertige, Kettenteilung versetzt angeordnet sind. Für einen Sensor 40 der drei Sensoren 38, 39, 40 sind an der Sensoranordnung verschiedene Verbindungsschnittstellen vorgesehen, je nachdem welche Art von Energieführungskette die Sensoranordnung 28 überwachen soll. Die drei Sensoren 38, 39, 40 sind derart zueinander versetzt angeordnet, dass wenn sich die EFK über die Sensoranordnung 28 bewegt, stets ein Sensor ein Ausgabesignal erzeugt, welches sich vom Basissignal unterscheidet. Hier ist das Basissignal beispielhaft als "0" ausgebildet und das Ausgabesignal als "1". Hier ist das Signal, insbesondere Ausgabesignal, der Sensoren 38, 39, 40 beispielhaft binär ausgebildet.

Das System 10 weist beispielsweise die EFK 12 auf zur indirekten Verschleißerkennung an der EFK 12. Geometrische Mittelpunkte zweier Sensoren 38, 40 sind zueinander entlang der Verfahrrichtung 15, insbesondere entlang der Längsachse 14 der EFK 12, in einem Abstand 44 entsprechend der nominalen, insbesondere in Bezug auf eine neuwertige, Kettenteilung versetzt angeordnet (vgl. Fig. 4A-4D).

Die Sensoranordnung 28 ist in Verfahrrichtung 15 der EFK 12 stationär neben dem Festpunkt 16 angeordnet. Die Sensoranordnung 28 ist stationär mit der Trägerstruktur, insbesondere einer Schieneneinheit 46, verbunden (vgl. Fig. 2). Die Sensoranordnung 28 ist zu einem Überwachen des Obertrums 25 der EFK 12 in Verfahrrichtung 15 der EFK 12 stationär neben dem Festpunkt 16 angeordnet. Der stationäre Festpunkt 16 der EFK 12 ist an dem Untertrum 21 der EFK 12 angeordnet. Die Sensoranordnung 28 ist in Verfahrrichtung 15 der EFK 12, insbesondere entlang der Längsachse 14 der EFK 12, versetzt zu dem stationären Festpunkt 16 angeordnet. Die Schieneneinheit 46 weist zwei zu der Längsachse 14 der EFK 12 parallel ausgerichtete Schienen auf, an welchen die EFK 12 gelagert ist und mit welchen die Sensoranordnung 28 verbunden ist. Der stationäre Festpunkt 16 der EFK 12 ist entlang einer Längsachse 47 der Schieneneinheit versetzt zu der Sensoranordnung 28 mit der Schieneneinheit 46 verbunden.

Die Auswerteeinrichtung 30 ist dazu ausgebildet, das zeitliche Verhalten der Ausgabesignale 34 der Sensoranordnung 28, insbesondere einzelner Sensoren 38, 39, 40 zu erfassen, insbesondere zu ermitteln, und/oder aus den Ausgabesignalen 34 die Momentangeschwindigkeit einzelner Kettenglieder 26 zu erfassen, insbesondere zu ermitteln.

Die Auswerteeinrichtung 30 ist dazu ausgebildet, aus den Abständen 42, insbesondere in Kombination mit den Momentangeschwindigkeiten, zweier benachbarter Kettenglieder 26 einen Verschleißzustand einer Verbindung der zwei Kettenglieder 26 zu ermitteln. Die Auswerteeinrichtung 30 ist dazu ausgebildet, die Ausgabesignale 34 der Sensoranordnung 28 auf Abweichungen zu einem vorgespeicherten Verhalten einer neuwertigen EFK 12 hin auszuwerten. Die Auswerteeinrichtung 30 weist ein Speichermodul auf, auf welchem Daten mit Richtwerten, die zu einer neuwertigen EFK 12 korrespondieren, gespeichert, insbesondere vorgespeichert, sind. Die Auswerteeinrichtung 30 ist dazu ausgebildet, durch Messung von Zeitintervallen zwischen Erfassung des periodischen Merkmals 32 und anhand einer jeweils erfassten Momentangeschwindigkeit den Abstand 42 zwischen aufeinanderfolgenden Kettengliedern 26 zu ermitteln und vorzugweise mit einer vorbestimmten, nominalen Kettenteilung zwecks Verschleiß-Erkennung abzugleichen. Die Auswerteeinrichtung 30 ist dazu ausgebildet, durch Messung von Zeitintervallen zwischen Erfassung des periodischen Merkmals 32 und anhand einer jeweils erfassten Momentangeschwindigkeit den normierten Abstand 42 zwischen aufeinanderfolgenden Kettengliedern 26 zu ermitteln. Die Auswerteeinrichtung 30 ist dazu ausgebildet, jeden ermittelten, und insbesondere normierten, Abstand 42 mit einer vorbestimmten, nominalen Kettenteilung zu einer Verschleiß-Erkennung an den entsprechenden Kettengliedern 26 abzugleichen.

Die Auswerteeinrichtung 30 ist dazu ausgebildet, abhängig von der Auswertung, insbesondere in Funktion eines aktuell erfassten Abstands 42 zwischen periodischen Merkmalen 32, eine Wartungsempfehlung auszugeben. Die Auswerteeinrichtung 30 weist ein Ausgabemodul 48 auf, welches als optisches und akustisches Ausgabemodul 48 ausgebildet ist. Das Ausgabemodul 48 ist teilweise als Display und teilweise als Lautsprecher ausgebildet. Die Wartungsempfehlung ist teilweise als akustischer Alarmton ausgebildet. Die Wartungsempfehlung ist teilweise als optisches Alarmsignal ausgebildet.

Die Sensoranordnung 28 und die Auswerteeinrichtung 30 sind dazu ausgebildet, eine Vielzahl aufeinanderfolgender Kettenglieder 26 zu erfassen zur abschnittsweisen Verschleiß-Erkennung. Die Sensoranordnung 28 ist dazu ausgebildet, die EFK 12 bei einem Verfahren der EFK 12 permanent zu überwachen, insbesondere das zumindest eine Merkmal 32 der Kettenglieder 26 zu erfassen.

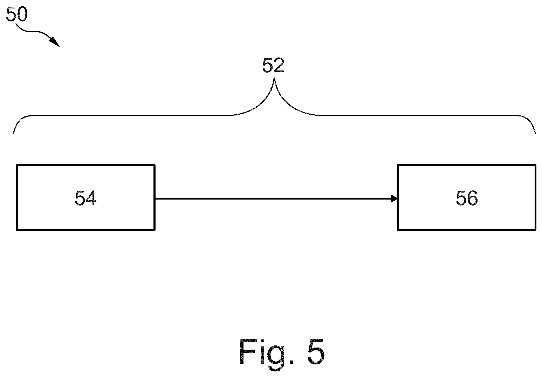

FIG.5 zeigt schematisiert einen beispielhaften Ablauf des Verfahrens 50 zur indirekten Verschleißerkennung an einer EFK 12.

Das Verfahren 50 hat als wesentlichen Schritt einen einzigen Dauerverfahrensschritt 52. Der Einfachheit der Erläuterung halber werden sich in dem Dauerverfahrensschritt 52 gleichzeitig und repetitiv bzw. dauerhaft wiederholende Verfahrensschritte im Folgenden als zwei einzelne Teilschritte in einer Beispielreihenfolge erläutert.

In einem Verfahrensschritt, insbesondere einem Erfassschritt 54, wird durch die Sensoranordnung 28 die an der Sensoranordnung 28 vorbeibewegte EFK 12 überwacht. In einem Verfahrensschritt, insbesondere dem Erfassschritt 54, wird durch die Sensoranordnung 28 bei jedem Erfassen des Merkmals 32 an einem Kettenglied 26 ein Ausgabesignal 34 erzeugt. In einem Verfahrensschritt, insbesondere einem Erfassschritt 54, wird jedes erzeugte Ausgabesignal an die Auswerteeinrichtung 30 gesendet. In einem Verfahrensschritt, insbesondere einem Erfassschritt 54, wird ein kontinuierliches Ausgabesignal 34 an die Auswerteeinrichtung 30 gesendet, welches in Abhängigkeit einer Anwesenheit des Merkmals 32 einen definierten Wert annimmt, beispielsweise "1" und ansonsten einen Basiswert beispielsweise "0" annimmt. In einem Verfahrensschritt, insbesondere einem Erfassschritt 54, werden kapazitive Näherungssensoren als die Sensoren 38, 39, 40 der Sensoranordnung 28 verwendet. In einem Verfahrensschritt, insbesondere einem Erfassschritt 54, wird durch jeden Sensor 38, 39, 40 der Sensoranordnung 28 die Anwesenheit vorbeifahrender Querstege 36, insbesondere als das Merkmal 32, der EFK 12 erfasst und ein entsprechendes Ausgabesignal 34 ausgegeben. In einem Verfahrensschritt, insbesondere einem Erfassschritt 54, werden mindestens zwei Sensoren 38, 39, 40 der Sensoranordnung 28 verwendet und/oder zwei Sensoren 38, 39, 40 der Sensoranordnung 28 verwendet, welche in einem Abstand 44 entsprechend der nominalen (neuwertigen) Kettenteilung angeordnet sind. In einem Verfahrensschritt, insbesondere einem Erfassschritt 54, wird die Sensoranordnung 28 verwendet, welche in Verfahrrichtung 15 der EFK 12 stationär neben dem Festpunkt 16 angeordnet ist.

In einem Verfahrensschritt, insbesondere einem Auswerteschritt 56, wird durch die Auswerteeinrichtung 30 das zeitliche Verhalten der Ausgabesignale 34 der Sensoranordnung 28, insbesondere einzelner Sensoren 38, 39, 40, erfasst und/oder durch die Auswerteeinrichtung 30 aus den Ausgabesignalen 34 die Momentangeschwindigkeit einzelner Kettenglieder 26 erfasst. In einem Verfahrensschritt, insbesondere dem Auswerteschritt 56, wird durch die Auswerteeinrichtung 30 aus dem zeitlichen Verhalten der Ausgabesignale 34, insbesondere einzelner Sensoren 38, 39, 40, der Sensoranordnung 28 die Momentangeschwindigkeit einzelner Kettenglieder 26 ermittelt. In einem Verfahrensschritt, insbesondere einem Auswerteschritt 56, wird durch die Auswerteeinrichtung 30 aus den Ausgabesignalen 34, und insbesondere aus dem zeitlichen Verhalten der Ausgabesignale 34, insbesondere einzelner Sensoren 38, 39, 40, der Sensoranordnung 28 die, insbesondere geschwindigkeitsnormierten, Abstände 42 einzelner Kettenglieder 26 zueinander ermittelt. In einem Verfahrensschritt, insbesondere einem Auswerteschritt 56, werden durch die Auswerteeinrichtung 30 die Ausgabesignale 34 der Sensoranordnung 28 auf Abweichungen zu einem vorgespeicherten Verhalten einer neuwertigen EFK 12 hin ausgewertet. In einem Verfahrensschritt, insbesondere einem Auswerteschritt 56, wird durch die Auswerteeinrichtung 30 zumindest ein, bevorzugt geschwindigkeitsnormierter, Abstand 42 einzelner Kettenglieder 26 zueinander mit vorgespeicherten Abständen 44 einer neuwertigen EFK 12 verglichen. In einem Verfahrensschritt, insbesondere einem Auswerteschritt 56, wird durch die Auswerteeinrichtung 30 durch Messung von Zeitintervallen zwischen Erfassung des periodischen Merkmals 32 und anhand einer jeweils erfassten Momentangeschwindigkeit der Abstand 42 zwischen aufeinanderfolgenden Kettengliedern 26 ermittelt und insbesondere mit einer vorbestimmten, nominalen Kettenteilung verglichen zwecks Verschleiß-Erkennung. In einem Verfahrensschritt, insbesondere einem Auswerteschritt 56, wird durch die Auswerteeinrichtung 30 abhängig von der Auswertung, insbesondere in Funktion eines aktuell erfassten Abstands 42 zwischen periodischen Merkmalen 42, eine Wartungsempfehlung ausgegeben.

In einem Verfahrensschritt, insbesondere einem Auswerteschritt 56, wird durch Sensoranordnung 28 und Auswerteeinrichtung 30 eine Vielzahl aufeinanderfolgender Kettenglieder 26, erfasst werden zur abschnittsweisen Verschleiß-Erkennung.

In einem Verfahrensschritt, insbesondere dem Dauerwiederholungsschritt 52, wird durch die Sensoranordnung 28 abhängig von den mindestens einem Merkmal, das beim Verfahren, insbesondere planmäßigen Bewegen, der EFK 12 relativ zur Sensoranordnung 28 periodisch, insbesondere entsprechend der Kettenteilung der EFK 12, wiederholend auftritt und insbesondere erfassbar ist, entsprechende Ausgabesignale erzeugt, welche durch die Auswerteeinrichtung 30 auswertet werden.

### Bezugszeichenliste

- 10: System
- 11: Basis
- 12: Energieführungskette (EFK)
- 13: Ende
- 14: Längsachse
- 15: Verfahrrichtung
- 16: Festpunkt
- 17: Ende
- 18: Mitnehmer
- 20: Bereich
- 21: Untertrum
- 22: Bereich
- 23: Umlenkbogen
- 24: Bereich
- 25: Obertrum
- 26: Kettenglied
- 28: Sensoranordnung
- 30: Auswerteeinrichtung
- 32: Merkmal
- 34: Ausgabesignal
- 36: Quersteg
- 38: Sensor
- 39: Sensor
- 40: Sensor
- 42: Abstand
- 44: Abstand
- 46: Schieneneinheit
- 48: Ausgabemodul
- 50: Verfahren
- 52: Dauer
- 54: Erfassschritt
- 56: Auswerteschritt

## Patentansprüche

1. System (10) zur indirekten Verschleißerkennung an einer Energieführungskette (12), zum Führen mindestens einer Leitung (19), wie z.B. eines Kabels, Schlauchs oder dgl., zwischen einem stationären Festpunkt (16) und einem dazu relativbeweglichen Mitnehmer (18), wobei die Energieführungskette (12) verfahrbar ist unter Bildung eines stationären Untertrums (21), eines verfahrbaren Obertrums (25) und dazwischen eines Umlenkbogens (23), und die Energieführungskette (12) insbesondere mit gleitendem Obertrum (25) ausgeführt und angeordnet ist, das System (10) umfassend eine vorzugsweise stationär angeordnete Sensoranordnung (28) und eine Auswerteeinrichtung (30), welche signaltechnisch mit der Sensoranordnung (28 verbunden ist,
**dadurch gekennzeichnet, dass**
die Sensoranordnung (28) mindestens zwei Sensoren (38, 39, 40) umfasst, die jeweils so angeordnet und eingerichtet sind, dass die Sensoren (38, 39, 40) abhängig von mindestens einem Merkmal, das beim Verfahren der Energieführungskette (12) relativ zur Sensoranordnung (28) periodisch, insbesondere entsprechend der Kettenteilung der Energieführungskette (12), wiederholend auftritt bzw. erfassbar ist, wobei jeder der Sensoren jeweils die Anwesenheit des zumindest einen Merkmals der Energieführungskette erfasst, entsprechende Ausgabesignale (34) erzeugen, welche die Auswerteeinrichtung (30) auswertet und
dass die Auswerteeinrichtung (30) eingerichtet ist, um das zeitliche Verhalten der Ausgabesignale (34) der einzelnen Sensoren (38, 39, 40) zu erfassen und auszuwerten.

2. System (10) nach Anspruch 1, wobei die Sensoren (38, 39, 40) in Verfahrrichtung (15) zueinander beabstandet, und so angeordnet und eingerichtet sind, dass jeder der Sensoren (38, 39, 40) die Anwesenheit vorbeifahrender Querstege (36) der Energieführungskette (12) erfasst und ein entsprechendes Ausgabesignal (34) ausgibt.

3. System (10) nach Anspruch 2, wobei die Sensoren (38, 39, 40) als kapazitive Näherungssensoren ausgeführt sind.

4. System (10) nach Anspruch 2 oder 3, wobei mindestens zwei Sensoren (38, 39, 40) der Sensoranordnung (28) in einem Abstand entsprechend der nominalen (neuwertigen) Kettenteilung angeordnet sind und/oder angeordnet und eingerichtet sind ein Merkmal zu erfassen, das von der Kettenteilung abhängig ist.

5. System (10) nach Anspruch 2, 3 oder 4, wobei die Sensoranordnung (28) in Verfahrrichtung (15) der Energieführungskette (12) stationär neben dem Festpunkt angeordnet ist.

6. System (10) nach einem der Ansprüche 1 bis 5, wobei
i) die Auswerteeinrichtung (30) aus dem zeitlichen Verhalten der Ausgabesignale (34) die Momentangeschwindigkeit einzelner Kettenglieder (26) erfasst; und/oder
wobei die Auswerteeinrichtung (30) drei Sensoren (38, 39, 40) umfasst, wobei zwei Sensoren der Sensoranordnung (28) in einem Abstand entsprechend der nominalen Kettenteilung angeordnet sind und ein dritter Sensor zur Fahrrichtungserkennung vorgesehen ist;
und/oder
ii) die Auswerteeinrichtung (30) die Ausgabesignale (34) der Sensoranordnung (28) auf Abweichungen zu einem vorgespeicherten Verhalten einer neuwertigen Energieführungskette (12) hin auswertet.

7. System (10) nach einem der Ansprüche 1 bis 6, wobei die Auswerteeinrichtung (30) durch Messung von Zeitintervallen zwischen Erfassung des periodischen Merkmals (32) und anhand einer jeweils erfassten Momentangeschwindigkeit den Abstand (42) zwischen aufeinanderfolgenden Kettengliedern (26) ermittelt und vorzugweise mit einer vorbestimmten, nominalen Kettenteilung vergleicht zwecks Verschleiß-Erkennung, insbesondere wobei
die Auswerteeinrichtung (30) abhängig von der Auswertung, insbesondere in Funktion eines aktuell erfassten Abstands zwischen periodischen Merkmalen (32), eine Wartungsempfehlung ausgibt.

8. System (10) nach einem der Ansprüche 1 bis 7, wobei Sensoranordnung (28) und Auswerteeinrichtung (30) eine Vielzahl aufeinanderfolgender Kettenglieder (26), erfassen zur abschnittsweisen Verschleiß-Erkennung.

9. Verfahren (50) zur indirekten Verschleißerkennung an einer Energieführungskette (12), zum Führen mindestens einer Leitung (19), wie z.B. eines Kabels, Schlauchs oder dgl., zwischen einem stationären Festpunkt (16) und einem dazu relativbeweglichen Mitnehmer (18), wobei die Energieführungskette (12) verfahrbar ist unter Bildung eines stationären Untertrums (21), eines verfahrbaren Obertrums (25) und dazwischen eines Umlenkbogens (23), und die Energieführungskette (12) insbesondere mit gleitendem Obertrum (25) ausgeführt und angeordnet ist, wobei eine vorzugsweise stationär angeordnete Sensoranordnung (28) vorgesehen ist und eine Auswerteeinrichtung (30) vorgesehen ist, welche signaltechnisch mit der Sensoranordnung (28) verbunden ist,
**dadurch gekennzeichnet, dass**
die Sensoranordnung (28) mindestens zwei Sensoren (38, 39, 40) umfasst, die jeweils so angeordnet und eingerichtet sind, dass die Sensoren (38, 39, 40) abhängig von mindestens einem Merkmal, das beim Verfahren der Energieführungskette (12) relativ zur Sensoranordnung (28) periodisch, insbesondere entsprechend der Kettenteilung der Energieführungskette (12), wiederholend auftritt, wobei jeder der Sensoren jeweils die Anwesenheit des zumindest einen Merkmals der Energieführungskette erfasst, entsprechende Ausgabesignale (34) erzeugen,
- dass in zumindest einem Verfahrensschritt durch die Sensoranordnung (28), abhängig von mindestens einem solchen Merkmal (32), das beim Verfahren der Energieführungskette (32) relativ zur Sensoranordnung (28) periodisch, insbesondere entsprechend der Kettenteilung der Energieführungskette (12), wiederholend auftritt bzw. erfassbar ist entsprechende Ausgabesignale (34) erzeugt werden, welche durch die Auswerteeinrichtung (30) auswertet werden und
- dass die Auswerteeinrichtung (30) das zeitliche Verhalten der Ausgabesignale (34) der einzelnen Sensoren (38, 39, 40) erfasst und auswertet.

10. Verfahren (50) nach Anspruch 9, wobei die Sensoren (38, 39, 40) in Verfahrrichtung (15) zueinander beabstandet angeordnet sind und in zumindest einem Verfahrensschritt durch jeden Sensor (38, 39, 40) der Sensoranordnung (28) die Anwesenheit vorbeifahrender Querstege (36), insbesondere als das zumindest eine Merkmal (32), der Energieführungskette (12), erfasst wird und ein entsprechendes Ausgabesignal (34) ausgegeben wird.

11. Verfahren (50) nach Anspruch 10, wobei in zumindest einem Verfahrensschritt kapazitive Näherungssensoren als die Sensoren (38, 39, 40) der Sensoranordnung (28) verwendet werden.

12. Verfahren (50) nach Anspruch 10 oder 11, wobei
a) die zumindest zwei Sensoren (38, 39, 40) der Sensoranordnung (28) ein Merkmal erfassen, das von der Kettenteilung abhängig ist und
vorzugsweise ein dritter Sensor vorgesehen ist, dessen Ausgabesignal zur Fahrrichtungserkennung genutzt wird;
und/oder
b) die Sensoranordnung (28) in Verfahrrichtung (15) der Energieführungskette (12) stationär neben dem Festpunkt (16) angeordnet ist.

13. Verfahren (50) nach einem der Ansprüche 9 bis 12, wobei
c) in zumindest einem Verfahrensschritt die Auswerteeinrichtung (30) aus dem zeitlichen Verhalten der Ausgabesignale (34) einzelner Sensoren (38, 39, 40) die Momentangeschwindigkeit einzelner Kettenglieder (26) erfasst;
und/oder
d) in zumindest einem Verfahrensschritt durch die Auswerteeinrichtung (30) die Ausgabesignale (34) der Sensoranordnung (28), insbesondere einzelner Sensoren (38, 39, 40), auf Abweichungen zu einem vorgespeicherten Verhalten einer neuwertigen Energieführungskette (12) hin ausgewertet werden.

14. Verfahren (50) nach einem der Ansprüche 9 bis 13, wobei in zumindest einem Verfahrensschritt durch die Auswerteeinrichtung (30) durch Messung von Zeitintervallen zwischen Erfassung des periodischen Merkmals (32) und anhand einer jeweils erfassten Momentangeschwindigkeit der Abstand (42) zwischen aufeinanderfolgenden Kettengliedern (26) ermittelt wird und vorzugweise mit einer vorbestimmten, nominalen Kettenteilung verglichen wird zwecks Verschleiß-Erkennung, insbesondere wobei
in zumindest einem Verfahrensschritt durch die Auswerteeinrichtung (30) abhängig von der Auswertung, insbesondere in Funktion eines aktuell erfassten Abstands (42) zwischen periodischen Merkmalen, eine Wartungsempfehlung ausgegeben wird.

15. Verfahren (50) nach einem der Ansprüche 9 bis 14, wobei in zumindest einem Verfahrensschritt durch Sensoranordnung (28) und Auswerteeinrichtung (30) eine Vielzahl aufeinanderfolgender Kettenglieder (26), erfasst werden zur abschnittsweisen Verschleiß-Erkennung.

## Claims

1. System (10) for indirect wear identification on an energy chain (12), for guiding at least one line (19), such as e.g. a cable, hose or the like, between a stationary fixed point (16) and a driver (18) mobile relative thereto, wherein the energy chain (12) is movable, forming a stationary lower run (21), a movable upper run (25) and, in between, a deflecting arc (23), and the energy chain (12) is in particular implemented and arranged with a sliding upper run (25), the system (10) comprising a sensor arrangement (28) preferably arranged stationary and an evaluation device (30), which is signal-connected to the sensor arrangement (28),
**characterized in that**
the sensor arrangement (28) comprises at least two sensors (38, 39, 40), which are in each case arranged and set up such that, depending on at least one feature which occurs or is detectable repeating periodically, in particular corresponding to the chain pitch of the energy chain (12), during movement of the energy chain (12) relative to the sensor arrangement (28), each of the sensors respectively detecting the presence of the at least one feature of the energy chain, the sensors (38, 39, 40) generate corresponding output signals (34), which the evaluation device (30) evaluates, and
**in that** the evaluation device (30) is set up in order to detect and evaluate the temporal behaviour of the output signals (34) of the individual sensors (38, 39, 40).

2. System (10) according to claim 1, wherein the sensors (38, 39, 40) are spaced apart from each other in the movement direction (15), and arranged and set up such that each of the sensors (38, 39, 40) detects the presence of passing cross bars (36) of the energy chain (12) and outputs a corresponding output signal (34).

3. System (10) according to claim 2, wherein the sensors (38, 39, 40) are implemented as capacitive proximity sensors.

4. System (10) according to claim 2 or 3, wherein at least two sensors (38, 39, 40) of the sensor arrangement (28) are arranged at a distance corresponding to the nominal (like-new) chain pitch and/or are arranged and set up to detect a feature which is dependent on the chain pitch.

5. System (10) according to claim 2, 3 or 4, wherein the sensor arrangement (28) is arranged stationary next to the fixed point in the movement direction (15) of the energy chain (12).

6. System (10) according to one of claims 1 to 5, wherein
i) the evaluation device (30) detects the instantaneous velocity of individual chain links (26) from the temporal behaviour of the output signals (34); and/or
wherein the evaluation device (30) comprises three sensors (38, 39, 40), wherein two sensors of the sensor arrangement (28) are arranged at a distance corresponding to the nominal chain pitch and a third sensor is provided for identifying the direction of travel;
and/or
ii) the evaluation device (30) evaluates the output signals (34) of the sensor arrangement (28) for deviations from a prestored behaviour of a like-new energy chain (12).

7. System (10) according to one of claims 1 to 6, wherein the evaluation device (30) determines the distance (42) between successive chain links (26) by measuring time intervals between the periodic feature (32) being detected and with reference to an instantaneous velocity detected in each case and preferably compares this with a predetermined, nominal chain pitch for the purpose of wear identification, in particular wherein
the evaluation device (30) outputs a maintenance recommendation depending on the evaluation, in particular as a function of a currently detected distance between periodic features (32).

8. System (10) according to one of claims 1 to 7, wherein sensor arrangement (28) and evaluation device (30) detect a plurality of successive chain links (26) for wear identification in sections.

9. Process (50) for indirect wear identification on an energy chain (12), for guiding at least one line (19), such as e.g. a cable, hose or the like, between a stationary fixed point (16) and a driver (18) mobile relative thereto, wherein the energy chain (12) is movable, forming a stationary lower run (21), a movable upper run (25) and, in between, a deflecting arc (23), and the energy chain (12) is in particular implemented and arranged with a sliding upper run (25), wherein a sensor arrangement (28) preferably arranged stationary is provided and an evaluation device (30), which is signal-connected to the sensor arrangement (28), is provided,
**characterized in that**
the sensor arrangement (28) comprises at least two sensors (38, 39, 40), which are in each case arranged and set up such that, depending on at least one feature which occurs repeating periodically, in particular corresponding to the chain pitch of the energy chain (12), during movement of the energy chain (12) relative to the sensor arrangement (28), each of the sensors respectively detecting the presence of the at least one feature of the energy chain, the sensors (38, 39, 40) generate corresponding output signals (34),
- **in that** in at least one process step, depending on at least one such feature (32) which occurs or is detectable repeating periodically, in particular corresponding to the chain pitch of the energy chain (12), during movement of the energy chain (32) relative to the sensor arrangement (28), corresponding output signals (34), which are evaluated by the evaluation device (30), are generated by the sensor arrangement (28) and
- **in that** the evaluation device (30) detects and evaluates the temporal behaviour of the output signals (34) of the individual sensors (38, 39, 40).

10. Process (50) according to claim 9, wherein the sensors (38, 39, 40) are arranged spaced apart from each other in the movement direction (15) and in at least one process step the presence of passing cross bars (36) of the energy chain (12), in particular as the at least one feature (32), is detected by each sensor (38, 39, 40) of the sensor arrangement (28) and a corresponding output signal (34) is output.

11. Process (50) according to claim 10, wherein in at least one process step capacitive proximity sensors are used as the sensors (38, 39, 40) of the sensor arrangement (28).

12. Process (50) according to claim 10 or 11, wherein
a) the at least two sensors (38, 39, 40) of the sensor arrangement (28) detect a feature which is dependent on the chain pitch and
a third sensor is preferably provided, the output signal of which is utilized for identifying the direction of travel;
and/or
b) the sensor arrangement (28) is arranged stationary next to the fixed point (16) in the movement direction (15) of the energy chain (12).

13. Process (50) according to one of claims 9 to 12, wherein
c) in at least one process step the evaluation device (30) detects the instantaneous velocity of individual chain links (26) from the temporal behaviour of the output signals (34) of individual sensors (38, 39, 40);
and/or
d) in at least one process step the output signals (34) of the sensor arrangement (28), in particular of individual sensors (38, 39, 40), are evaluated for deviations from a prestored behaviour of a like-new energy chain (12) by the evaluation device (30).

14. Process (50) according to one of claims 9 to 13, wherein in at least one process step the distance (42) between successive chain links (26) is determined by the evaluation device (30) by measuring time intervals between the periodic feature (32) being detected and with reference to an instantaneous velocity detected in each case and is preferably compared with a predetermined, nominal chain pitch for the purpose of wear identification, in particular wherein
in at least one process step a maintenance recommendation is output by the evaluation device (30) depending on the evaluation, in particular as a function of a currently detected distance (42) between periodic features.

15. Process (50) according to one of claims 9 to 14, wherein in at least one process step a plurality of successive chain links (26) are detected by sensor arrangement (28) and evaluation device (30) for wear identification in sections.

## Revendications

1. Système (10) pour la détection indirecte de l'usure sur une chaîne d'énergie coulissante (12), pour guider au moins un conduit (19), tel qu'un câble, un tuyau ou similaire, entre un point fixe stationnaire (16) et un entraîneur (18) mobile par rapport à celui-ci, la chaîne d'énergie coulissante (12) pouvant être déplacée en formant un brin inférieur stationnaire (21), un brin supérieur mobile (25) et, entre les deux, un coude de renvoi (23), et la chaîne d'énergie coulissante (12) est notamment réalisée et agencée avec un brin supérieur coulissant (25), le système (10) comprenant un dispositif de capteurs (28) de préférence fixe et un dispositif d'évaluation (30) qui est relié au dispositif de capteurs (28) par des signaux,
**caractérisé en ce que**
le dispositif de capteurs (28) comprend au moins deux capteurs (38, 39, 40) qui sont chacun disposés et agencés de telle sorte que les capteurs (38, 39, 40), en fonction d'au moins une caractéristique qui se produit ou peut être détectée de manière périodique, notamment répétitive lors du déplacement de la chaîne d'énergie coulissante (12) par rapport à l'ensemble de capteurs (28), en particulier en fonction du pas de la chaîne d'énergie coulissante (12), chacun des capteurs détectant respectivement la présence d'au moins une caractéristique de la chaîne d'énergie coulissante, génèrent des signaux de sortie correspondants (34) que le dispositif d'évaluation (30) évalue, et
**en ce que** le dispositif d'évaluation (30) est conçu pour détecter et évaluer le comportement temporel des signaux de sortie (34) des différents capteurs (38, 39, 40).

2. Système (10) selon la revendication 1, dans lequel les capteurs (38, 39, 40) sont espacés les uns des autres dans la direction de déplacement (15) et sont disposés et conçus de telle sorte que chacun des capteurs (38, 39, 40) détecte la présence de traverses (36) passantes de la chaîne d'énergie coulissante (12) et émet un signal de sortie (34) correspondant.

3. Système (10) selon la revendication 2, dans lequel les capteurs (38, 39, 40) sont réalisés sous forme de capteurs de proximité capacitifs.

4. Système (10) selon la revendication 2 ou 3, dans lequel au moins deux capteurs (38, 39, 40) du dispositif de capteurs (28) sont disposés à une distance correspondant au pas nominal (à l'état neuf) de la chaîne et/ou sont disposés et configurés pour détecter une caractéristique qui dépend du pas de la chaîne.

5. Système (10) selon la revendication 2, 3 ou 4, dans lequel le dispositif de capteurs (28) est disposé de manière stationnaire à côté du point fixe dans le sens de déplacement (15) de la chaîne porte-câbles (12).

6. Système (10) selon l'une quelconque des revendications 1 à 5, dans lequel
i) le dispositif d'évaluation (30) détecte la vitesse instantanée des maillons individuels (26) à partir du comportement temporel des signaux de sortie (34); et/ou
dans lequel le dispositif d'évaluation (30) comprend trois capteurs (38, 39, 40), deux capteurs du dispositif de capteurs (28) étant disposés à une distance correspondant au pas nominal de la chaîne et un troisième capteur étant prévu pour la détection du sens de déplacement;
et/ou
ii) le dispositif d'évaluation (30) évalue les signaux de sortie (34) du dispositif de capteurs (28) afin de détecter des écarts par rapport à un comportement préenregistré d'une chaîne d'énergie coulissante (12) neuve.

7. Système (10) selon l'une quelconque des revendications 1 à 6, dans lequel le dispositif d'évaluation (30) détermine la distance (42) entre des maillons de chaîne (26) successifs en mesurant des intervalles de temps entre la détection de la caractéristique périodique (32) et à l'aide d'une vitesse instantanée détectée dans chaque cas, et la compare de préférence à un pas de chaîne nominal prédéterminé à des fins de détection d'usure, en particulier
le dispositif d'évaluation (30) émettant une recommandation de maintenance en fonction de l'évaluation, en particulier en fonction d'une distance actuellement détectée entre des caractéristiques périodiques (32).

8. Système (10) selon l'une quelconque des revendications 1 à 7, dans lequel le dispositif de détection (28) et le dispositif d'évaluation (30) détectent une pluralité de maillons de chaîne successifs (26) pour la détection d'usure par sections.

9. Procédé (50) pour la détection indirecte de l'usure sur une chaîne d'énergie coulissante (12), pour guider au moins un conduit (19), tel qu'un câble, un tuyau ou similaire, entre un point fixe stationnaire (16) et un entraîneur (18) mobile par rapport à celui-ci, la chaîne d'énergie coulissante (12) pouvant être déplacée en formant un brin inférieur stationnaire (21), un brin supérieur mobile (25) et, entre ceux-ci, un coude de renvoi (23), et la chaîne d'énergie coulissante (12) est notamment réalisée et agencée avec un brin supérieur coulissant (25), un dispositif de capteurs (28) de préférence fixe étant prévu, ainsi qu'un dispositif d'évaluation (30) qui est relié au dispositif de capteur (28) par des signaux,
**caractérisé en ce que**
le dispositif de capteurs (28) comprend au moins deux capteurs (38, 39, 40) qui sont chacun disposés et agencés de telle sorte que les capteurs (38, 39, 40) génèrent des signaux de sortie correspondants (34) en fonction d'au moins une caractéristique se produisant périodiquement, en particulier de manière répétitive, correspondant au pas de la chaîne d'énergie coulissante (12), lors de la déplacement la chaîne d'énergie coulissante (12) par rapport au dispositif de capteurs (28), chacun des capteurs détectant respectivement la présence d'au moins une caractéristique,
- **en ce que**, dans au moins une étape du procédé, le dispositif de capteurs (28) produit des signaux de sortie (34) correspondants en fonction d'au moins une telle caractéristique (32) qui se produit ou peut être détectée de manière périodique, en particulier de manière répétitive correspondant au pas de la chaîne, lors du déplacement de la chaîne d'énergie coulissante (12) par rapport au dispositif de capteurs (28), signaux qui sont évalués par le dispositif d'évaluation (30), et
- **en ce que** le dispositif d'évaluation (30) détecte et évalue le comportement temporel des signaux de sortie (34) des différents capteurs (38, 39, 40).

10. Procédé (50) selon la revendication 9, dans lequel les capteurs (38, 39, 40) sont disposés à distance les uns des autres dans la direction de déplacement (15) et, dans au moins une étape du procédé, chaque capteur (38, 39, 40) du dispositif de capteurs (28) détecte la présence de traverses (36) qui passent, en particulier en tant que ladite au moins une caractéristique (32) de la chaîne d'énergie coulissante (12), et émet un signal de sortie (34) correspondant.

11. Procédé (50) selon la revendication 10, dans lequel, dans au moins une étape du procédé, des capteurs de proximité capacitifs sont utilisés comme capteurs (38, 39, 40) du dispositif de capteurs (28).

12. Procédé (50) selon la revendication 10 ou 11, dans lequel
a) lesdits au moins deux capteurs (38, 39, 40) du dispositif de capteurs (28) détectent une caractéristique qui dépend du pas de la chaîne et
de préférence, un troisième capteur est prévu, dont le signal de sortie est utilisé pour la détection du sens de déplacement;
et/ou
b) le dispositif de capteurs (28) est disposé de manière stationnaire à côté du point fixe (16) dans le sens de déplacement (15) de la chaîne d'énergie coulissante (12).

13. Procédé (50) selon l'une quelconque des revendications 9 à 12, dans lequel
c) dans au moins une étape du procédé, le dispositif d'évaluation (30) détecte la vitesse instantanée de maillons individuels (26) de la chaîne à partir du comportement temporel des signaux de sortie (34) de capteurs individuels (38, 39, 40);
et/ou
d) dans au moins une étape du procédé, le dispositif d'évaluation (30) évalue les signaux de sortie (34) du dispositif de capteurs (28), en particulier des capteurs individuels (38, 39, 40), afin de détecter des écarts par rapport à un comportement préenregistré d'une chaîne porte-câbles (12) neuve.

14. Procédé (50) selon l'une des revendications 9 à 13, dans lequel, dans au moins une étape du procédé, le dispositif d'évaluation (30) mesure les intervalles de temps entre la détection de la caractéristique périodique (32) et à l'aide d'une vitesse instantanée détectée respectivement, la distance (42) entre des maillons de chaîne successifs (26) est déterminée et est de préférence comparée à un pas de chaîne nominal prédéfini à des fins de détection d'usure, en particulier
dans au moins une étape du procédé, le dispositif d'évaluation (30) émet une recommandation de maintenance en fonction de l'évaluation, en particulier en fonction d'une distance (42) actuellement détectée entre des caractéristiques périodiques.

15. Procédé (50) selon l'une des revendications 9 à 14, dans lequel, dans au moins une étape du procédé, une pluralité de maillons de chaîne successifs (26) sont détectés par un agencement de capteurs (28) et un dispositif d'évaluation (30) afin de détecter l'usure par sections.
